# FASCICULE DE BREVET EUROPEEN

(11) **EP 2 064 078 B1**
(45) Date de publication et mention de la délivrance du brevet: **20.04.2011**
(21) Numéro de dépôt: 06830967.3
(22) Date de dépôt: 21.09.2006
(51) Int. Cl.: B60F 3/00, E01D 15/22

(54) **VEHICULE AMPHIBIE COMPORTANT DES ELEMENTS POUR FORMER UN PONT FLOTTANT**
AMPHIBIENFAHRZEUG MIT ELEMENTEN ZUR FORMUNG EINES SCHWIMMSTEGS
AMPHIBIOUS VEHICLE COMPRISING ELEMENTS FOR FORMING A FLOATING BRIDGE

(43) Date de publication de la demande: 03.06.2009
(73) Titulaire: CONSTRUCTIONS INDUSTRIELLES DE LA MEDITERRANEE- CNIM, F-75008 Paris (FR)
(72) Inventeur: RICHEUX, Elisabeth, F-13600 La Ciotat (FR); AUBERT, Henri, F-83110 Sanary (FR)
(74) Mandataire: Thinat, Michel
(86) Numéro de dépôt international: PCT/FR2006/002164
(87) Numéro de publication internationale: WO 2008/034956

(56) Documents cités:
- EP-A1- 1 332 896
- GB-A- 1 544 611
- US-A- 3 021 544
- US-A- 3 269 349

## Description

La présente invention concerne un véhicule amphibie comportant des éléments tels des caissons, des flotteurs et des rampes pour former un pont flottant.

Le véhicule de l'invention fait partie des systèmes de franchissement de brèches humides pour véhicules lourds intégrés dans un véhicule amphibie homologué aussi bien en transport routier qu'en transport fluvial.

Le franchissement de brèches humides ou sèches étant principalement, mais non exclusivement, un des champs d'activités principaux du génie militaire, la présente invention intéressera principalement la construction de véhicules amphibies militaires qui doivent être conformés pour pouvoir faire passer aussi bien des véhicules, notamment des véhicules militaires lourds, par exemple jusqu'à 110 tonnes, mais aussi du personnel avec leur équipement. De plus, il est souhaitable que le véhicule équipé de l'invention soit aéroportable afin qu'il puisse être déplacé rapidement d'une région vers une autre, et cela pour le moins par avion, de préférence aussi par hélicoptère.

Pour répondre à ces différentes attentes, le véhicule amphibie doit être conformé pour pouvoir être utilisé de façon satisfaisante et autant que possible équivalente tant sur l'eau que sur la terre ferme. De plus, il doit être en mesure de traverser sans aide extérieure la région intermédiaire entre l'eau et le sol et doit notamment pouvoir s'adapter à la morphologie des berges ou rives. Enfin, mais sans être exhaustif dans les caractéristiques requises d'un véhicule amphibie auquel répond le véhicule de l'invention, le véhicule amphibie doit pouvoir être utilisé tout aussi bien seul qu'en combinaison avec ou plusieurs autres véhicules de même conception pour former un pont flottant.

Afin de pouvoir répondre aussi bien aux exigences d'un déplacement routier que de la mise en place comme pont flottant, les éléments nécessaires pour former un pont, tels des caissons, des flotteurs et des rampes, ont déjà été disposés de différentes manières sur un véhicule formant une base roulante automotrice. Parmi les différentes configurations essayées, se trouve aussi celle d'une disposition tournante selon laquelle l'ensemble des caissons, rampes et éventuellement flotteurs forment un bloc monté pivotant sur la base roulante. Selon cette conception, lorsque le véhicule est mis à l'eau, l'axe longitudinal de la base roulante est orienté approximativement parallèle à la rive du fleuve ou du lac à traverser. Et lorsque le véhicule est en position, l'ensemble des éléments formant le pont est tourné dans un sens ou dans l'autre d'environ 90° autour d'un axe vertical.

Cependant, la diversité des morphologies des brèches humides ou sèches à traverser demande de pouvoir adapter la disposition des éléments formant un pont flottant. Dans ce sens, il s'est avéré désavantageux de devoir tourner l'ensemble des éléments en un seul bloc.

Le document GB-A-1 544 611 concerne un véhicule amphibie comportant une base roulante automotrice sur laquelle sont montés pivotant latéralement deux flotteurs. Sur chacun des flotteurs, deux rampes pliantes sont montées pivotantes autour d'un axe respectif vertical. Le véhicule amphibie connu comprend ainsi quatre éléments pouvant être déployés par pivotement autour de quatre axes verticaux espacés les uns des autres. Toutefois, le véhicule amphibie connu ne comprend ni de flotteur ni de caisson individuel pour chacune des rampes pliantes. De plus, les deux flotteurs du véhicule connu ne sont pas montés pivotants autour d'un axe vertical mais pivotants autour d'axes horizontaux.

Le but de l'invention est de proposer un véhicule amphibie comportant des éléments tels des caissons, des flotteurs et des rampes, disposés sur une base roulante auto-motrice de manière à pouvoir être déployés selon différentes configurations.

Le but de l'invention est atteint avec un véhicule amphibie selon la revendication 1.

Grâce à ces dispositions, les véhicules de l'invention se distinguent par une polyvalence de capacité de chargement, notamment pour l'utilisation en mode bac, qui permet le franchissement des véhicules de classe moyenne (par exemple classe militaire de charge MLC35) avec un module, de classe char lourd (par exemple MSC70) avec deux modules et jusqu'à la classe véhicules en roue lourds (par exemple MLC100) avec trois modules. Par ailleurs, le véhicule de l'invention se distingue par sa capacité à constituer un pont permettant de couvrir toutes les largeurs de brèches à partir de 23 mètres, par une automatisation complète des opérations de déploiement et une très grande automatisation des opérations de connexion entre véhicules, ainsi que par un encombrement et une masse faible, rendant possible un aéro-transport moyennant des avions de capacité moyenne.

Le véhicule de l'invention est conformé pour pouvoir être déployé, à partir de sa configuration repliée, en différentes configurations ou modes de déploiement selon que le véhicule est utilisé seul ou en combinaison avec un autre ou plusieurs autres véhicules de même conception et, le cas échéant, selon la position dans une suite de véhicules accouplés. Les principaux modes de configuration sont les suivants :
- mode court avec le seul déploiement des caissons,
- mode demi-court avec déploiement des caissons et des flotteurs, mais avec les rampes repliées,
- mode demi-court avec deux rampes déployées,
- mode long avec toutes les rampes repliées,
- mode long avec deux rampes déployées du même côté, et
- mode long avec toutes les rampes déployées.

Le véhicule de l'invention est utilisé avec toutes les rampes repliées lorsqu'il constitue un élément ou module central d'un pont flottant ou d'un bac. L'utilisation d'un véhicule avec au moins une rampe déployée et prévue pour des cas où, par exemple, le véhicule constitue un module d'extrémité d'un pont flottant ou d'un bac et où il s'agit d'assurer l'accès aux berges.

Le véhicule de l'invention est avantageusement conformé pour entrer dans la catégorie des véhicules de classe moyenne, c'est-à-dire de l'ordre de MLC35, et pouvant embarquer sur un bac à un véhicule ou traverser une brèche humide ou sèche sur un pont constitué d'un véhicule similaire.

Le véhicule de l'invention présente une conception pour partie classique pour un véhicule amphibie. Ainsi, le véhicule comprend une base roulante, en caisse autoporteuse étanche, une cabine blindée pour trois personnes en cas de véhicule militaire, la cabine étant solidaire de la structure de la base roulante, une chaîne cinématique à au moins deux essieux, par exemple deux, trois ou quatre essieux, à roues indépendantes et à transmission intégrale sur chacune des roues, toutes les roues étant directrices, et un dispositif de mise en oeuvre central permettant le déploiement des caissons, des flotteurs et des rampes selon différentes configurations. Le véhicule peut donc présenter plusieurs configurations d'emploi qui, selon la mission spécifique, remplissent des conditions particulières du cahier des charges, dont les principales conditions sont énumérées plus loin.

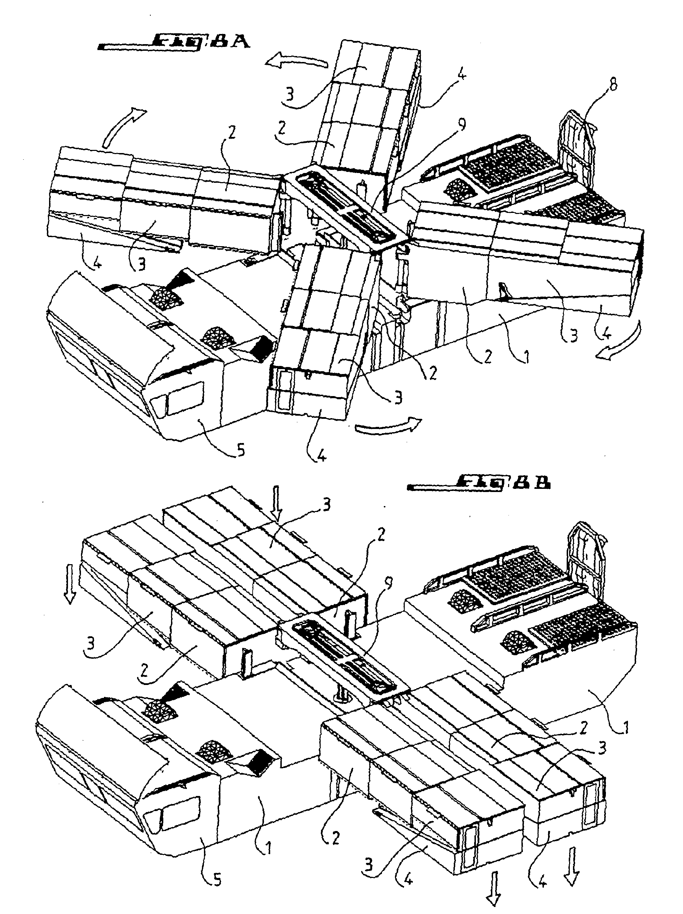

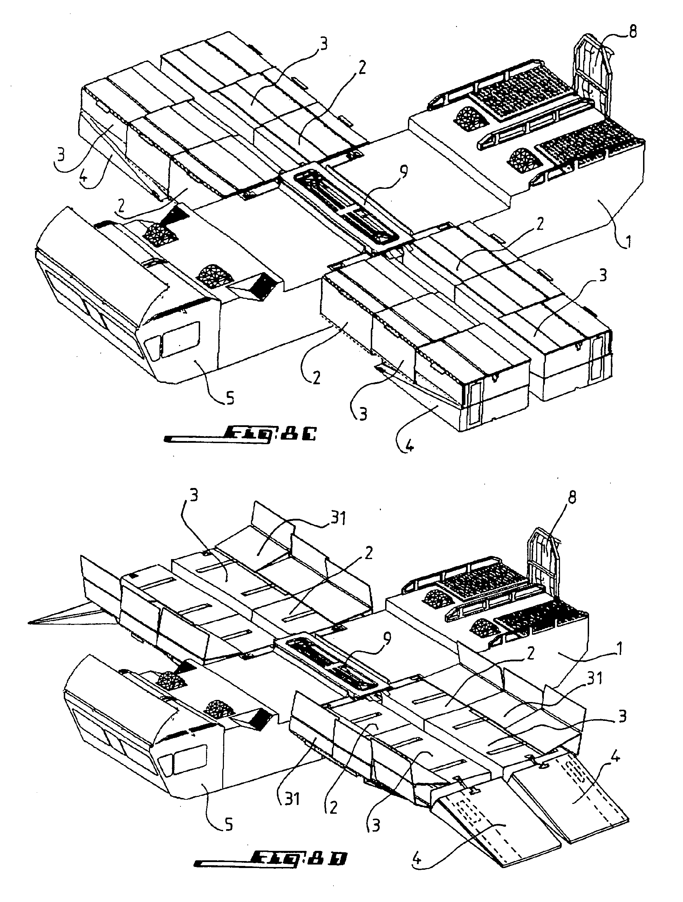

L'utilisation d'un véhicule de l'invention se fait essentiellement suivant le schéma ci-après :
1. Placement du véhicule amphibie sur la berge, devant la brèche à traverser, moteur en marche et équipage dans la cabine (blindée) ;
2. (facultatif) Déploiement total ou partiel (voir plus loin la description en référence à la figure 8A) des caissons-flotteurs-rampes suivant la configuration désirée, à terre, si la nécessité d'entrer à l'eau en mode déployé se présente (par exemple fort courant) ; l'avantage d'un déploiement partiel est de concilier capacité de roulage et encombrement limité, avec une bonne stabilité dans le courant ;
3. Entrée dans l'eau et mise en marche des propulseurs aquatiques ;
4. Déploiement dans l'eau (s'il est entré dans l'eau replié) suivant le déroulement ci-dessous :
   a. déconnexion et translation éventuelles des flotteurs-rampes sur la caisse,
   b. pivotement des caissons (avec ou sans les flotteurs-rampes en fonction de a),
   c. verrouillage des caissons en position perpendiculaire à la caisse,
   d. déploiement éventuel des rampes,
   e. descente de l'ensemble jusqu'au niveau de la caisse en partie basse dans les rails des platines,
   f. verrouillage des caissons dans les platines en position basse ;
5. Sortie de l'équipage par le toit de la cabine sur le pont pour manoeuvre depuis l'extérieur ;
6. Navigation du véhicule pour se positionner en vis-à-vis d'un autre véhicule. Dans le cas du bac à un véhicule, navigation jusqu'à la berge pour l'embarquement des véhicules à transporter ;
7. Pré-centrage et pré-verrouillage de la connexion entre deux véhicules ;
8. Verrouillage de la connexion par activation des verrous pilotés depuis le poste de commande portable ;
9. Navigation jusqu'à la berge pour l'embarquement des véhicules à transporter ;
10. Positionnement des rampes sur la berge ;
11. (facultatif) En mode pont, amarrage statique ou dynamique du pont ;
12. Embarquement des véhicules à faire traverser ;
13. Circulation des véhicules en pont ou déplacement des modules en bac jusqu'à l'autre berge ;
14. Débarquement des véhicules (après pose des rampes sur la berge en mode bac) ;
15. Déconnexion des véhicules en mode pont ou en bac multi-véhicules ;
16. Ecartement des véhicules d'extrémité de la berge ;
17. Entrée du pilote dans la cabine ;
18. Repli dans l'eau (si sortie d'eau replié) suivant le déroulement ci-dessous :
   a. déverrouillage des caissons par rapport aux platines,
   b. montée des caissons (avec ou sans flotteurs-rampes),
   c. repli des rampes (si véhicule d'extrémité),
   d. pivotement des caissons (avec ou sans les flotteurs-rampes) jusqu'à la position parallèle à la caisse (position en mode replié),
   e. translation inverse des flotteurs-rampes et connexion éventuelle sur les caissons,
19. sortie des véhicules sur la berge opposée.

Afin de pouvoir être déployé selon les différentes possibilités que le véhicule de l'invention offre, ce dernier peut comprendre également l'une au moins des caractéristiques ci-après, considérées isolément ou selon toute combinaison techniquement possible :
le dispositif de déploiement comprend un pivot central comportant un vérin de relevage prenant appui sur la base roulante et une jambe télescopique de guidage par groupe d'éléments à pivoter, chacune de ces jambes télescopiques servant comme axe vertical de pivotement à un groupe d'éléments ;
le dispositif de déploiement comprend des platines de fixation inclinables à partir d'une position sensiblement verticale et permettant de fixer les groupes d'éléments dans leur position déployée ;
le véhicule comprend des premiers moyens permettant, lorsque le véhicule est dans une configuration repliée, d'éloigner dans chaque groupe d'éléments les caissons des autres éléments suivant une direction sensiblement parallèle à l'axe longitudinal de la base roulante ;
le dispositif de déploiement comprend des deuxièmes moyens conformés pour permettre un déploiement des rampes par rapport aux flotteurs avec un effet de démultiplication croissant de l'effort de déploiement au fur et à mesure que le déploiement des rampes progresse ;
le véhicule comprend des premiers moyens de verrouillage permettant de verrouiller les différents éléments aussi bien dans leur position déployée que dans leur position repliée ;
le véhicule comprend des deuxièmes moyens de verrouillage permettant de le verrouiller avec un autre véhicule de même conception lors de la réalisation d'un bac ou d'un pont, les deuxièmes moyens de verrouillage étant conformés pour permettre un verrouillage entre deux véhicules quelle que soit la configuration de déploiement de chacun des véhicules ;
selon une première configuration de déploiement, chacun des quatre groupes d'éléments est constitué d'un caisson ;
selon une deuxième configuration de déploiement, deux groupes d'éléments sont constitués chacun d'un caisson et les deux autres groupes d'éléments sont constitués chacun d'un caisson, d'un flotteur et d'une rampe ;
selon une troisième configuration de déploiement, chacun des quatre groupes d'éléments est constitué d'un caisson, d'un flotteur et d'une rampe.

Les différentes configurations d'un véhicule selon l'invention peuvent être résumées de la manière suivante, une description plus détaillée étant donnée plus loin en référence aux dessins.

En mode transport routier, c'est-à-dire lorsque le véhicule de l'invention doit se déplacer sur la terre ferme, les caissons, flotteurs et rampes sont agencés de manière à former quatre groupes disposés autour d'un pivot central, en deux fois deux groupes dont chaque groupe comporte, à partir du pivot central respectivement vers l'avant ou vers l'arrière de la base roulante, un caisson suivi d'une superposition d'un flotteur et d'une rampe. Alors que le caisson et le flotteur correspondant sont attachés l'un à l'autre de manière amovible, le caisson est attaché au pivot central moyennant un axe autour duquel il peut pivoter sur 90° de sa position avant ou arrière vers une position latérale ou transversale.

Le déplacement du véhicule dans de l'eau est assuré par deux propulseurs aquatiques, par exemple des pompes centrifuges.

Lorsque le véhicule de l'invention est utilisé seul pour former un bac ou un pont flottant, tous les éléments, c'est-à-dire les caissons, les flotteurs et les rampes sont déployés. Pour un véhicule qui doit être transporté embarquant perpendiculairement par rapport à l'ensemble caisse-cabine de la base roulante, la longueur de chargement fixe est égale à la largeur de la caisse. Pour des véhicules à transporter plus longs, le mécanisme d'inclinaison des caissons flotteurs-rampes est capable de lever l'ensemble caissons-flotteurs-rampes et la charge qu'ils supportent.

Lorsque deux ou plusieurs véhicules de l'invention sont accouplés pour former un bac ou un pont flottant multi-véhicules, chacun des véhicules peut être déployé entièrement, tout comme il est possible de déployer chacun partiellement seulement, notamment de manière asymétrique.

Ainsi, deux véhicules de l'invention peuvent former un bac avec une capacité véhicule à chenille lourd en présentant les mêmes capacités en performances de navigation qu'un bac à un seul véhicule. Pour former ce bac, les deux ou plusieurs véhicules sont déployés entièrement à l'exception des rampes situées en regard du véhicule voisin. Les véhicules sont connectés par l'interface prévu sur les flotteurs ou par l'interface prévu sur les caissons selon le degré de déploiement des uns et des autres des véhicules accouplés. En connexion longue, les véhicules sont connectés par l'interface des flotteurs, tandis qu'en connexion courte, la connexion se fait par l'interface caisson. En version bac, les véhicules accouplés sont propulsés chacun par des moteurs aquatiques afin que l'ensemble des véhicules accouplés puisse naviguer aux vitesses maximales dans n'importe quelle direction. Dans le cas de trois véhicules amphibies de configurations capables de transporter un véhicule à roues lourd, les deux véhicules d'extrémité sont déployés longs et le véhicule de milieu est déployé court.

En ce qui concerne la configuration comme pont flottant, les véhicules accouplés, déployés longs, courts ou demi-courts, peuvent former un module central de pont, de manière à couvrir toute la largeur d'une brèche humide, avec utilisation de deux véhicules en module d'extrémité déployés longs ou demi-courts avec les rampes déployées du côté des berges. Les différentes possibilités de déploiement des véhicules selon l'invention confèrent au pont flottant la capacité de couvrir toutes les largeurs de brèches à partir de 23 mètres, le pas minimal étant inférieur à l'amplitude de recouvrement des rampes sur les berges.

D'autres caractéristiques et avantages de la présente invention ressortiront de la description ci-après d'un mode de réalisation de l'invention et de ses variantes, la description étant faite en référence aux dessins annexés dans lesquels :
- la figure 1 représente schématiquement en perspective un véhicule amphibie selon un mode de réalisation préféré de l'invention,
- la figure 2 représente le véhicule de la figure 1 en une vue sur le châssis du véhicule,
- la figure 3 représente le véhicule de la figure 1 entièrement déployé,
- la figure 4 représente une première combinaison de deux véhicules de l'invention formant un bac,
- la figure 5 représente une seconde combinaison de deux véhicules de l'invention formant un bac court,
- les figures 6A à 6F représentent les principales étapes de déploiement d'un véhicule de l'invention en déploiement court,
- les figures 7A à 7F représentent un véhicule de l'invention en déploiement demi-court,
- les figures 8A à 8E représentent les principales étapes de déploiement d'un véhicule de l'invention en déploiement long,
- les figures 9A à 9D représentent les principales phases de déploiement d'un caisson moyennant le dispositif de déploiement d'un véhicule selon l'invention,
- la figure 10 représente un dispositif de déploiement selon l'invention,
- la figure 11 représente un détail du dispositif de la figure 10,
- les figures 12A à 12D représentent en détail le pivotement de deux caissons moyennant le dispositif de déploiement d'un véhicule amphibie selon l'invention,
- les figures 13A à 13D représentent les différentes phases d'un verrouillage de caissons déployés,
- la figure 14 représente schématiquement le mécanisme de déploiement des rampes,
- les figures 15 et 16 représentent respectivement en configuration repliée et en configuration déployée l'ensemble caissons-flotteurs-rampes,
- la figure 17 représente un détail du principe de déploiement de la rampe d'un véhicule de l'invention,
- les figures 18A à 18D représentent, en quatre étapes, le déploiement d'une rampe par rapport aux flotteurs sur lequel elle est articulée,
- les figures 19A et 19B représentent le principe de verrouillage d'une rampe par rapport à un flotteur sur lequel elle est articulée,
- les figures 20A à 20E représentent, en cinq étapes, l'évolution d'un mécanisme de verrouillage de la rampe en position repliée,
- les figures 21A, 21B et, en davantage de détails
- les figures 22A et 22B, représentent un système de connexion inter-véhicules disposé sur les flotteurs d'un véhicule selon l'invention,
- les figures 23A et 23B représentent respectivement des moyens de verrouillage mâles et des moyens de verrouillage femelles disposés sur des caissons d'un véhicule selon l'invention, et
- la figure 24 représente des moyens mécaniques destinés à faciliter les mouvements de translation des flotteurs sur la base roulante d'un véhicule selon l'invention.

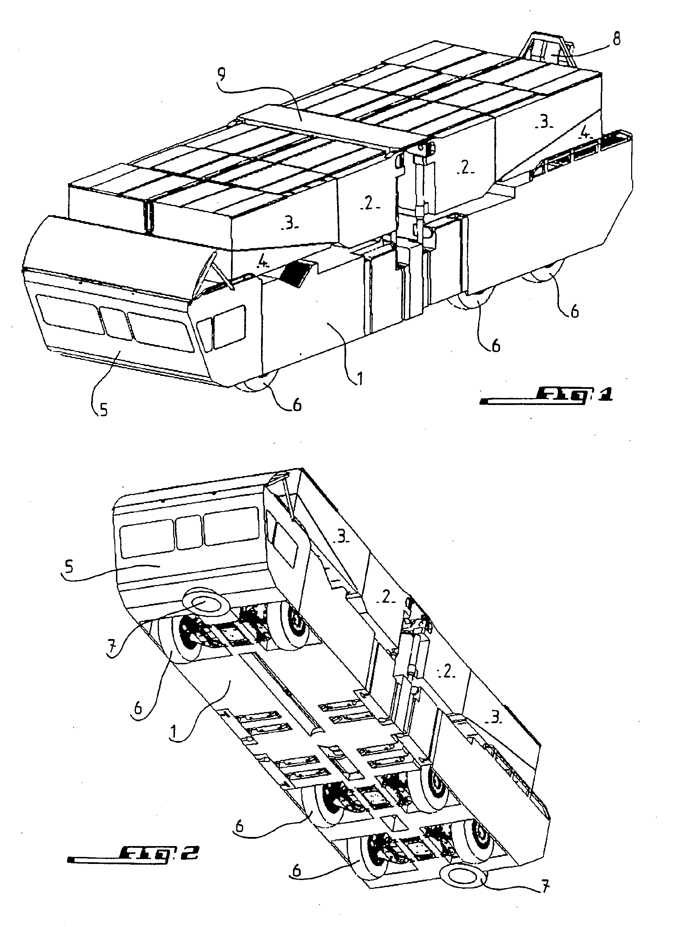

Comme les figures 1 et 2 le montrent respectivement en une vue en perspective d'au-dessus et une vue en perspective d'en dessous, un véhicule amphibie selon l'invention comporte, rangé sur une base roulante automotrice 1, des éléments tels des caissons 2, des flotteurs 3 et des rampes 4, ces éléments étant rangés les uns au moins partiellement sur les autres et suivant une orientation essentiellement parallèle à un axe longitudinal A de la base roulante 1, lorsque le véhicule est dans une configuration repliée pour un déplacement sur terre ferme. Les éléments sont conformés pour pouvoir être déployés de manière à former une partie de voie ou de pont orientée transversalement par rapport à l'axe longitudinal A de la base roulante 1, lorsque le véhicule doit former, seul ou avec un autre véhicule de même conception, un pont flottant ou un bac.

La structure principale de la base roulante 1 du véhicule de l'invention est constituée d'une caisse autoporteuse étanche réalisée de préférence en aluminium et d'une cabine solidaire de la structure de la caisse. La cabine peut accueillir trois personnes, sachant que deux personnes suffisent pour toutes les opérations de commande du véhicule de l'invention. Exceptionnellement, même une seule personne peut suffire pour effectuer toutes les commandes nécessaires pour la manipulation du véhicule. La sortie des occupants de la cabine dans l'eau s'effectue par le toit, où l'espace et la visibilité sont suffisants pour la mise en oeuvre du ou des bacs ou d'un pont flottant à partir d'un ou plusieurs véhicules selon l'invention.

La base roulante 1 est motorisée par un moteur thermique agencé en position centrale arrière. L'énergie mécanique est transmise par un groupe moto-propulseur aux essieux via une chaîne de transmission mécanique comportant des arbres et des cardans dont une partie de transfert montée en position centrale répartit le couple suivant les informations de motricité provenant de chaque roue. Dans la version représentée sur les figures 1 et 2, le véhicule comporte trois essieux à roues indépendantes et à transmission intégrale 6/6 avec les six roues directrices. Les suspensions sont de type oléopneumatique à double triangle superposé et le système de freinage est intégré dans la jante de chaque roue sous la forme d'un système hydraulique. La direction est assistée et pilotée depuis un boîtier primaire asservi aux commandes principales et transmise aux essieux arrière via un système de transmission mécanique par arbres et palonniers.

La propulsion aquatique est assurée par exemple par deux systèmes de type pompe centrifuge, en prise direct sur le moteur par une prise de force et par l'intermédiaire d'arbres et de cardans. Le système de refroidissement est du type échangeur air/eau ventilé en circuit fermé quand les radiateurs sont positionnés sur la caisse de la base roulante en partie arrière. L'échappement est situé en extrémité arrière de la caisse et les tubulures dépassent au-dessus de la caisse pour prévenir l'immersion. L'admission d'air est effectuée par des collecteurs situés en avant de la caisse et transmise vers une boîte à air située proche du groupe moto-propulseur.

Les éléments conformés et agencés pour être déployés afin de former une voie de roulement ou une surface de parcage pour un véhicule ou de stockage pour du matériel sont disposés en quatre groupes d'éléments sensiblement égaux dont chacun est agencé et monté sur la base roulante 1 de manière à constituer une position de repli à partir de laquelle les éléments de chacun des quatre groupes peuvent être déployés pour obtenir au moins trois configurations de ponts flottants ou bacs différents.

Ainsi, le véhicule amphibie de l'invention comporte, sur un châssis 1 ayant la forme d'une caisse étanche, trois essieux 6 avec, au total, six roues indépendantes directrices à transmission intégrale et entraînées par un moteur thermique. Le moteur thermique fournit également de l'énergie mécanique à deux propulseurs aquatiques 7. Le véhicule lui-même et le déploiement et le reploiement des différents éléments formant un pont flottant ou un bac sont commandés à partir d'une cabine 5 agencée sur une des deux extrémités opposées de la caisse 1.

Les quatre groupes d'éléments dont chacun comprend un caisson 2, un flotteur 3 et une rampe 4, sont montés sur la caisse 1 moyennant un pivot central 9 conformé pour pouvoir pivoter chacun des groupes d'éléments entre la position de repli et une position de déploiement et vice versa. Les quatre caissons 2 sont disposés de part et d'autre du pivot central 9, c'est-à-dire deux caissons sont disposés du côté du pivot central orienté vers l'avant du véhicule et les deux autres caissons sont disposés du côté du pivot central orienté vers l'arrière du véhicule. Les deux caissons avant et les deux caissons arrière sont montés pivotants sur le pivot central 9 aux angles extérieurs en regard respectivement des deux caissons avant et arrière droit et des deux caissons avant et arrière gauche. Cette disposition sera expliquée en plus de détails plus loin dans le texte.

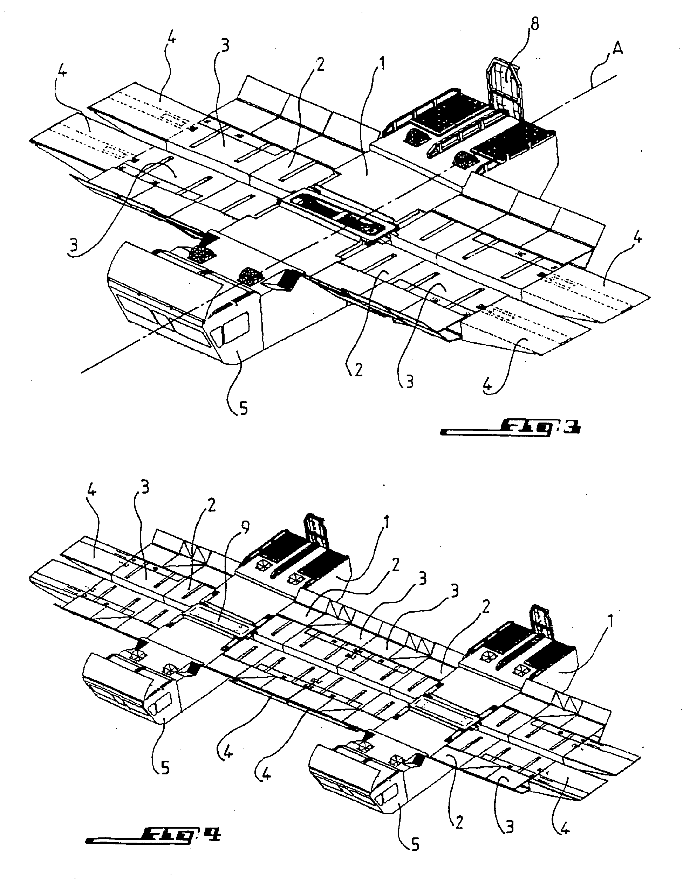

La figure 3 représente un véhicule de l'invention entièrement déployé formant à lui seul un pont flottant ou un bac. Dans cette configuration, les quatre caissons 2, les quatre flotteurs 3 et les quatre rampes 4 sont entièrement déployés et forment une voie de circulation orientée transversalement par rapport à l'axe longitudinal A de la caisse 1 du véhicule. Cette figure montre également l'échappement 8 surélevé afin de prévenir toute immersion. La figure 3 montre par ailleurs que les caissons 2 et les flotteurs 3 peuvent comporter des moyens permettant d'élargir la voie de circulation et des moyens de rehaussement latéral, caractéristiques techniques qui sont particulièrement avantageuses en tant que compromis entre les contraintes d'une largeur maximale pour un déplacement routier et une largeur plus grande résultant en un meilleur comportement de flottabilité pour une utilisation sur l'eau.

Notons que sur les figures 3 et suivantes, lorsque le véhicule de l'invention est montré entièrement, celui-ci est représenté sans les essieux 6 et les éléments de propulsion routière et aquatique.

La figure 4 montre une combinaison de deux véhicules de l'invention pour former un bac long. Selon cette configuration, les éléments des deux véhicules de l'invention sont déployés entièrement sur les côtés formant les extrémités du bac à deux véhicules alors que sur les deux côtés en regard, seuls les caissons 2 et les flotteurs 3 sont déployés, les rampes 4 restant repliées.

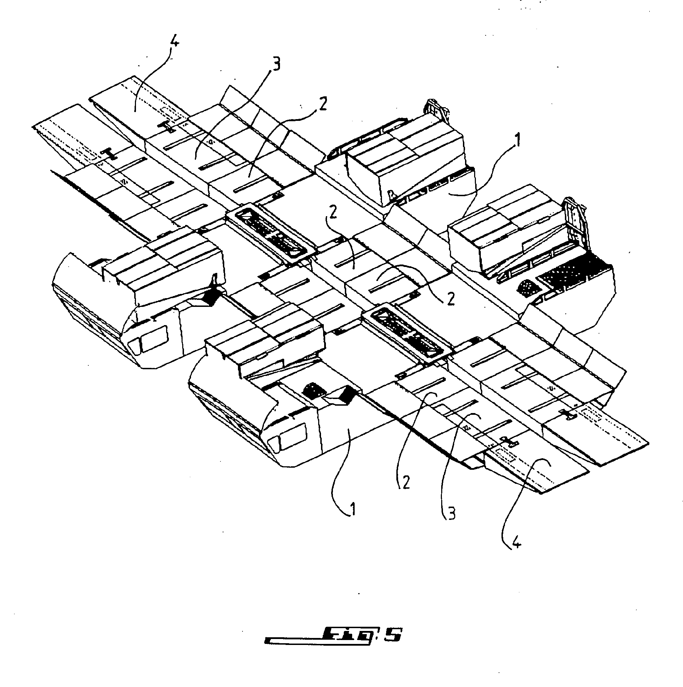

La figure 5 représente la combinaison de deux véhicules de l'invention dans une configuration plus courte que celle représentée sur la figure 4. Cette configuration courte est obtenue en déployant sur les deux véhicules uniquement les deux côtés qui forment respectivement l'extrémité droite et l'extrémité gauche du pont ou du bac alors que sur les deux côtés en regard des deux véhicules, seuls les caissons 2 sont déployés.

Les deux configurations de pont flottant ou de bac représentées sur les figures 4 et 5 ne sont données qu'à titre d'exemple, car il va sans dire que l'on peut combiner davantage de véhicules de l'invention que seulement deux et que le mode de déploiement de chacun des véhicules utilisés dans cette combinaison dépend de la longueur totale du pont flottant ou du bac à obtenir. Les seules prescriptions fixes dans ce sens sont que sur chacun des véhicules combinés, au moins les quatre caissons 2 sont déployés, sur les deux véhicules de tête ou d'extrémité les éléments caissons 2, flotteurs 3 et rampes 4 sont quasi systématiquement entièrement déployés car les rampes facilitent l'accès au pont ou au bac et le départ de celui-ci également et l'ensemble flotteur plus rampe peut être varié en inclinaison afin d'obtenir la meilleure adaptation passible aux berges. Pour les véhicules en position intermédiaire, le déploiement de ceux du caisson 2 ou du caisson 2 et du flotteur 3 dépend de la longueur du pont du bac à obtenir. En tout cas, sur ces véhicules intermédiaires, les rampes ne sont pas déployées.

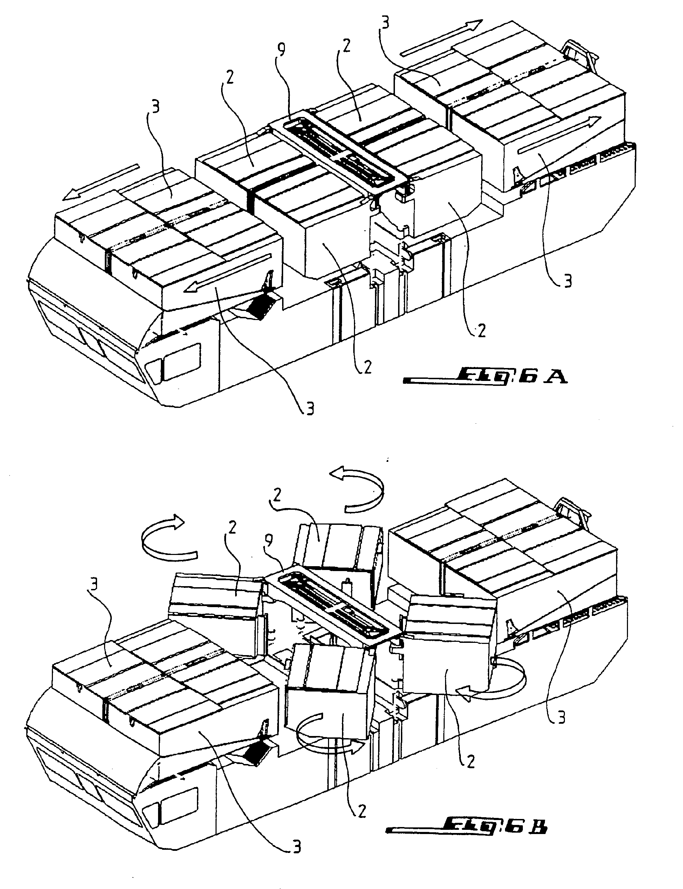

Afin de pouvoir remplir les différentes fonctions pour lesquelles le véhicule amphibie de l'invention est conçu, les éléments conformés pour pouvoir constituer une voie de circulation ou une surface de parcage ou de stockage peuvent, être déployés de différentes manières qui, cependant, peuvent être résumées dans les trois configurations de base représentées par quelques étapes de leur déploiement respectivement sur les figures 6A à 6F, 7A à 7F et 8A à 8E.

Lorsqu'il s'agit d'obtenir un élément de pont flottant ou de bac à déploiement court, seuls les caissons 2 sont déployés. A cet effet, dans une première étape représentée sur la figure 6A, les sous-ensembles flotteurs 3 et rampes 4 sont éloignés, par translation, des caissons 2 correspondants. Ceci est représenté par les quatre flèches dont deux sont orientées en direction avant et les deux autres en direction arrière par rapport au sens de marche avant du véhicule de l'invention. Ce déplacement est nécessaire pour créer un espace vide suffisamment grand pour que les caissons 2 puissent pivoter comme cela est représenté en tant que étape suivante sur la figure 6B.

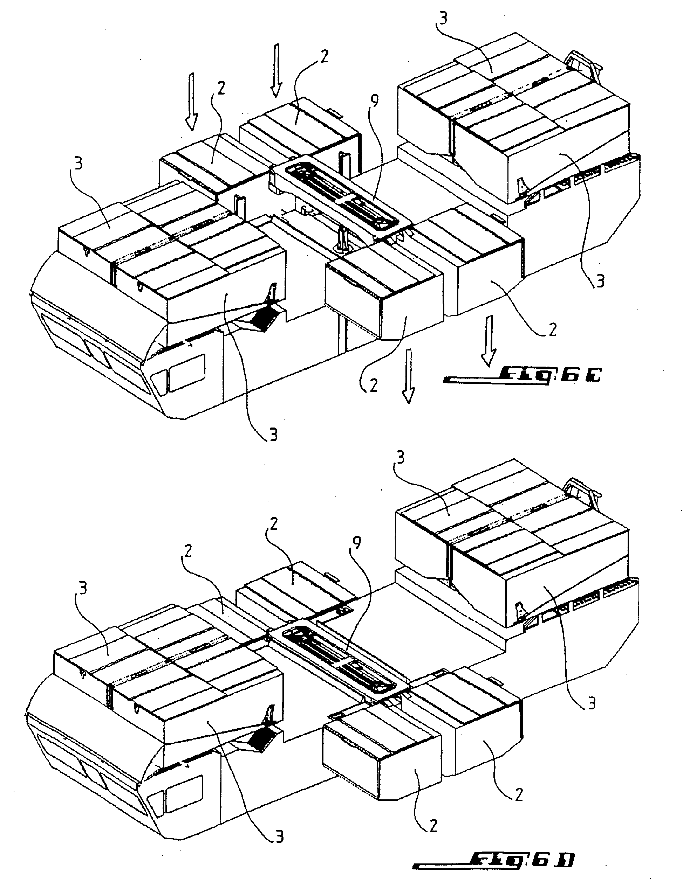

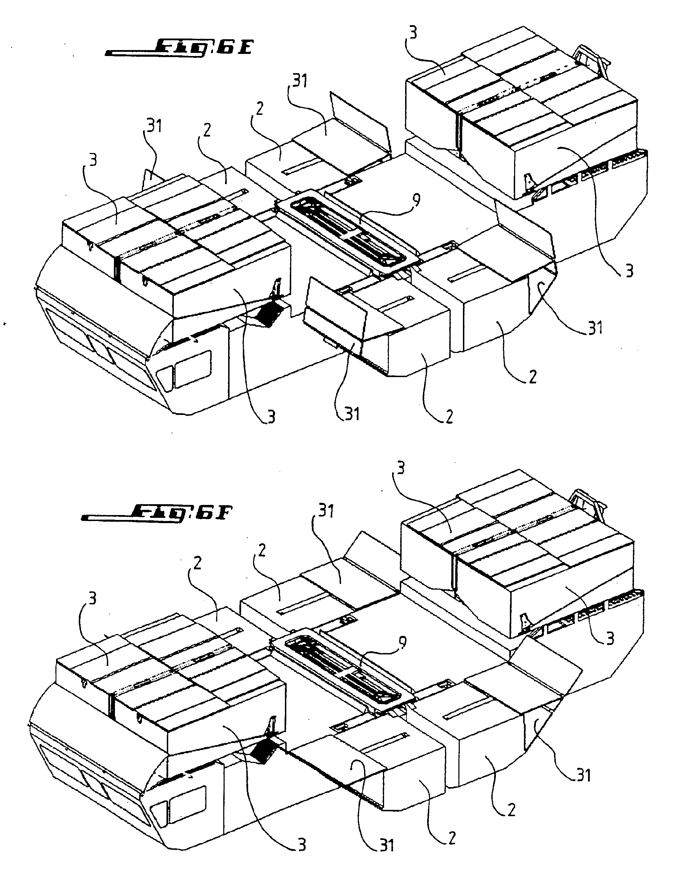

Sur la figure 6B, les quatre caissons 2 sont représentés dans une position intermédiaire entre la position repliée et la position entièrement déployée. Le pivotement des caissons 2 se termine, comme le représente la figure 6C, après un pivotement de 90°, c'est-à-dire lorsque les caissons 2 sont orientés transversalement par rapport à l'axe longitudinal du véhicule. Ensuite, l'ensemble des quatre caissons 2 et le pivot central 9 sont descendus de leur position surélevée vers une position d'utilisation. Une fois cette position atteinte, pour le mode de réalisation représenté ici, la largeur de voie de la face supérieure des quatre caissons 2 est élargie, comme cela est représenté sur les figures 6E, 6F.

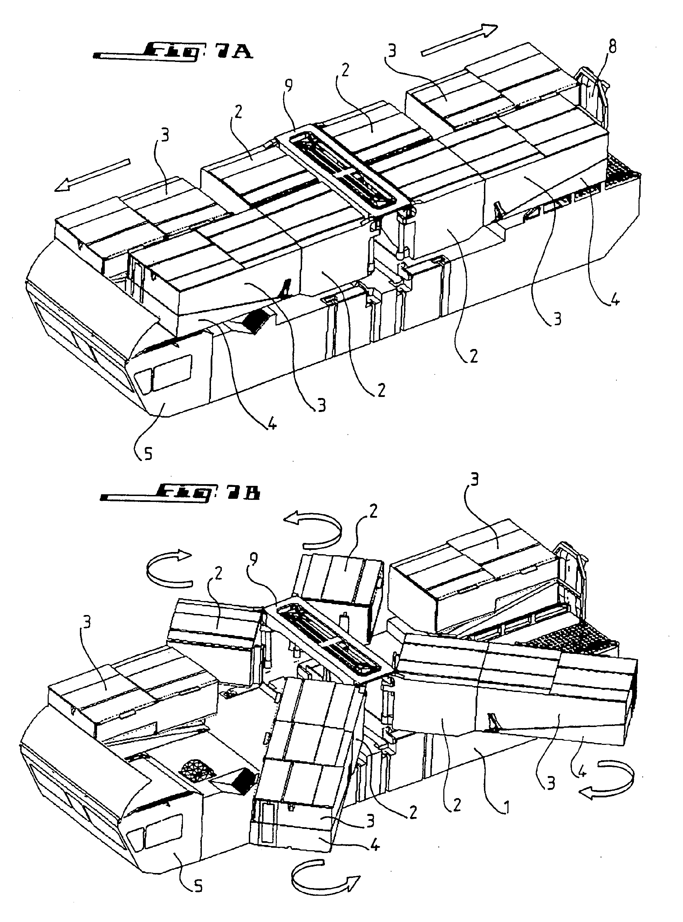

Pour obtenir un élément de pont flottant ou de bac avec un déploiement demi-court, le déploiement de différents éléments est celui représenté sur les figures 7A à 7F. Dans une première étape, les deux sous-ensembles flotteurs 3 et rampes 4 disposés sur un côté du véhicule sont déplacés en translation pour s'éloigner des caissons 2 correspondants. De l'autre côté, c'est-à-dire sur le côté sur lequel les éléments doivent être déployés entièrement, les caissons 2 et les sous-ensembles flotteurs 3 et rampes 4 correspondants sont laissés ensemble.

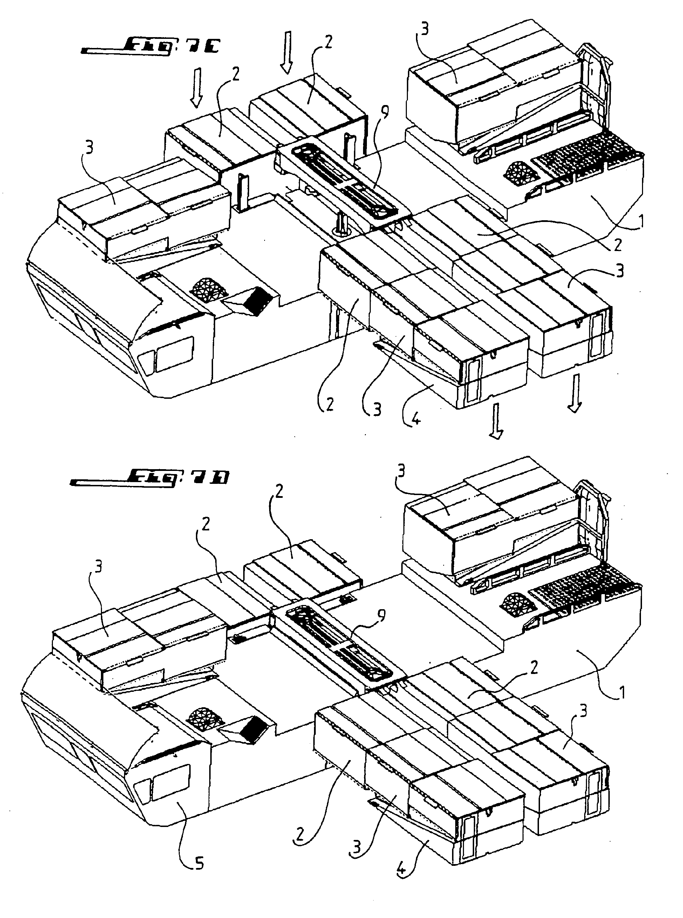

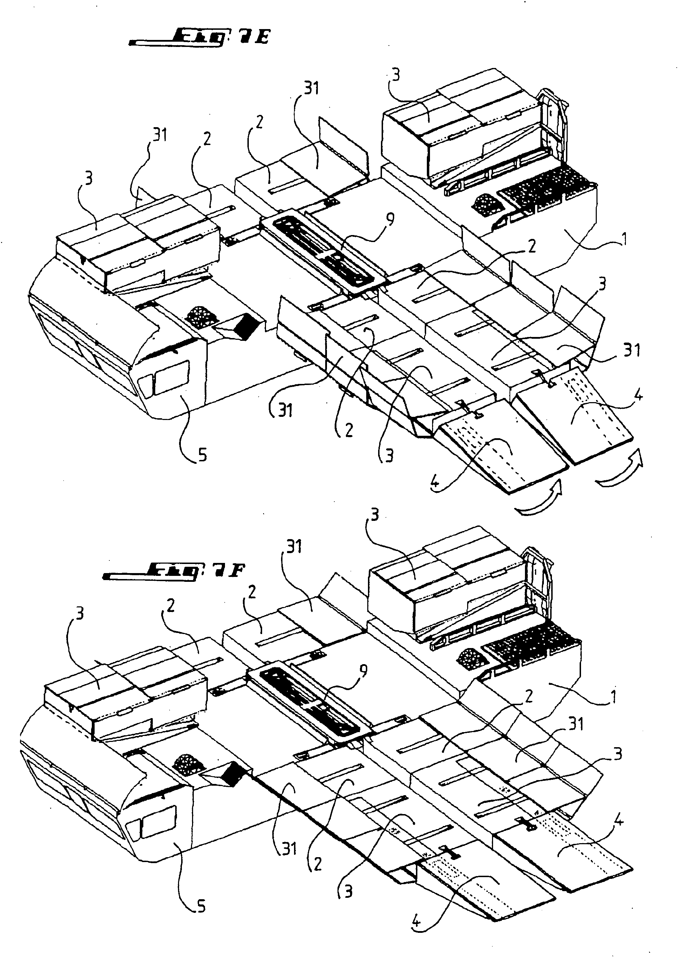

Dans l'étape suivante, représentée sur la figure 7B, les deux caissons 2 d'un côté et les deux ensembles caissons 2-flotteurs 3-rampes 4 sont tournés de 90° dans des sens opposés pour atteindre la position de fin de pivotement représentée sur la figure 7C. Après la fin du pivotement, les deux caissons 2 et les deux ensembles caisson-flotteur-rampe sont descendus dans la position d'utilisation représentée sur la figure 7D. Puis, les rampes 4 sont déployées (figure 7E) et les moyens d'élargissement de voie sont actionnés comme représenté sur la figure 7F.

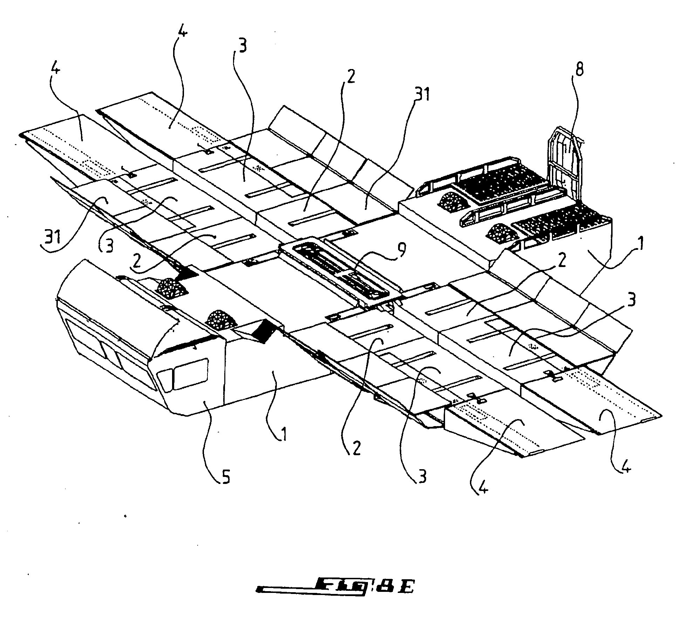

Afin d'obtenir un élément dé pont flottant ou de bac à déploiement long, il n'y a pas lieu de procéder à un éloignement, en translation, de l'ensemble ou de partie des sous-ensembles flotteurs 3, rampes 4 des caissons 2 correspondants mais il est procédé tout de suite, comme représenté sur la figure 8A, au pivotement de 90° des quatre ensembles caisson 2 / flotteur 3 / rampe 4 pour obtenir leur position transversale par rapport à l'axe longitudinal A du véhicule, comme représenté sur la figure 8B. Après pivotement de 90°, les quatre ensembles caisson 2 / flotteur 3 / rampe 4 sont descendus dans leur position d'utilisation et les rampes 4 sont déployées, comme représenté sur la figure 8D pour obtenir le déploiement final comme représenté sur la figure 8E.

Le déploiement des éléments caisson 2, flotteur 3 et rampe 4, expliqué ci avant, est mis en oeuvre au moyen d'un dispositif de déploiement 10 comportant essentiellement trois groupes de moyens, le premier étant le pivot central 9 monté en appui sur la caisse 1 moyennant un vérin hydraulique de relevage 11, le deuxième groupe étant formé par quatre jambes télescopiques de guidage espacées les unes des autres et autour duquel pivotent les caissons 2, et le troisième groupe comprenant quatre platines des fixations 13 pour la fixation et l'inclinaison des caissons 2, les platines 13 étant montées pivotant par rapport à la caisse 1 autour d'un axe de pivotement correspondant B. A chacune des platines 13 sont associés deux vérins d'inclinaison 14.

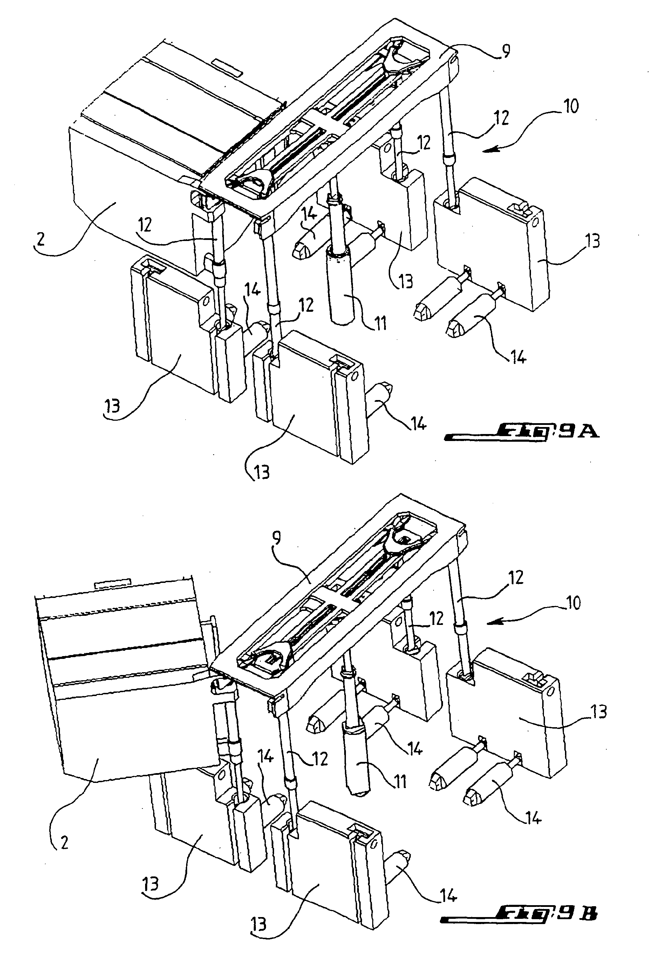

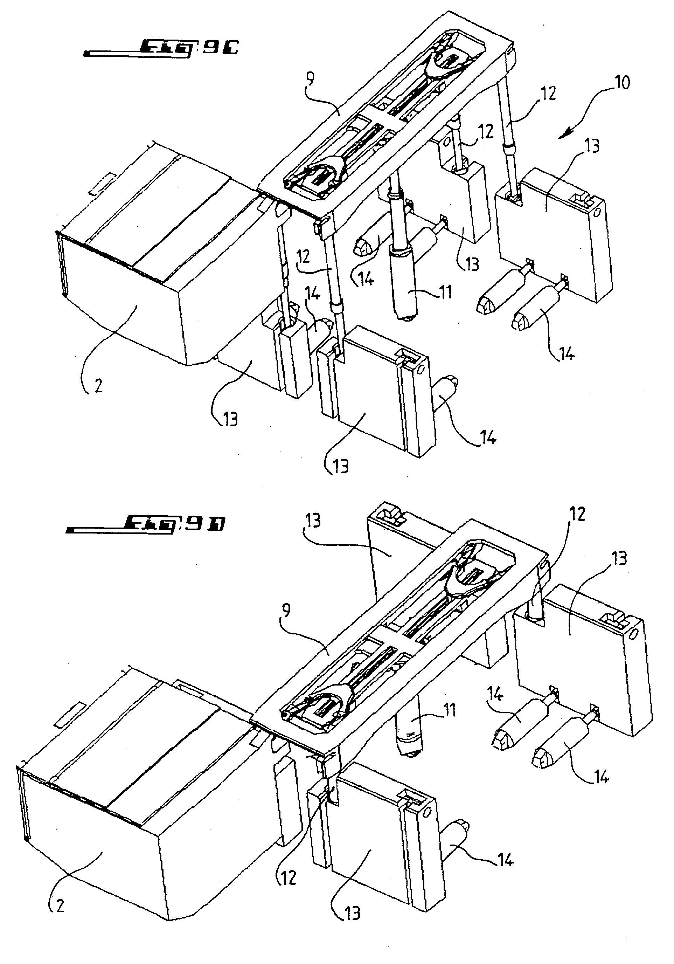

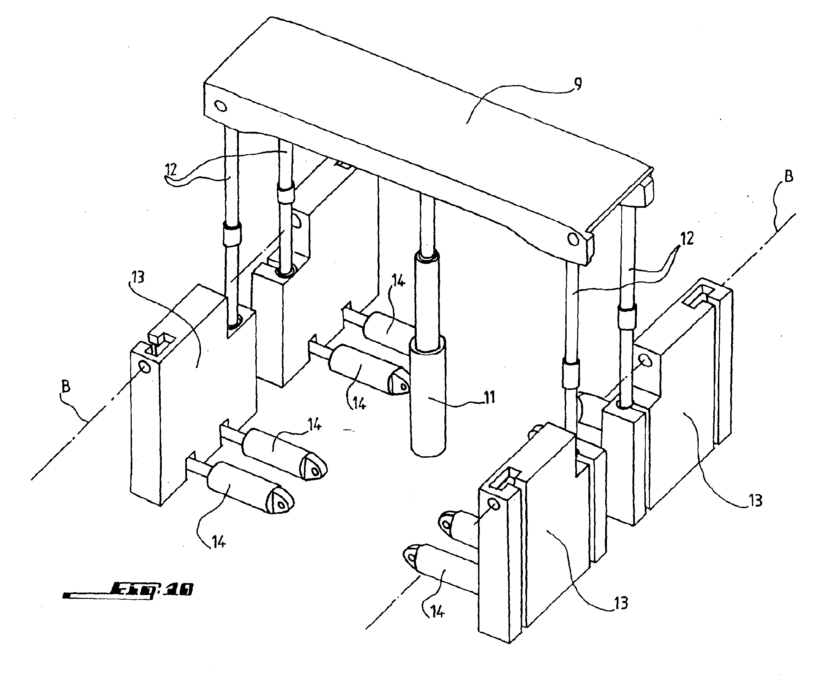

Les figures 9A à 9D montrent les principales phases de déploiement d'un caisson moyennant le dispositif de déploiement d'un véhicule selon l'invention, le dispositif étant représenté sur la figure 10.

Comme le montrent plus particulièrement les figures 9A à 9D, chacun des caissons 2 est monté pivotant autour d'une jambe télescopique correspondante 12. A cet effet, le caisson 2 comporte deux brides en saillie 202, 203 par lesquelles passe la jambe télescopique 12.

Comme cela est déjà visible sur les figures 6, 7 et 8, le pivot central 9 est en position élevée le temps que les quatre caissons 2 sont en position de repli et pendant leur pivotement vers la position de déploiement. Cette situation est représentée sur les figures 9A et 9B. Ce n'est que lorsque les caissons 2, seuls ou avec les sous-ensembles flotteur 3 / rampe 4 correspondants, ont atteint leurs positions de déploiement, que le pivot central 9 descend avec les caissons déployés 2 vers la position d'utilisation et que les jambes télescopiques correspondantes 12 se contractent. Lorsque le caisson 2 a atteint son niveau d'utilisation, le pivot central 9 est également dans sa position la plus basse par rapport à la caisse 1 et le vérin de relevage 11 et les quatre jambes télescopiques 12 sont entièrement rentrés.

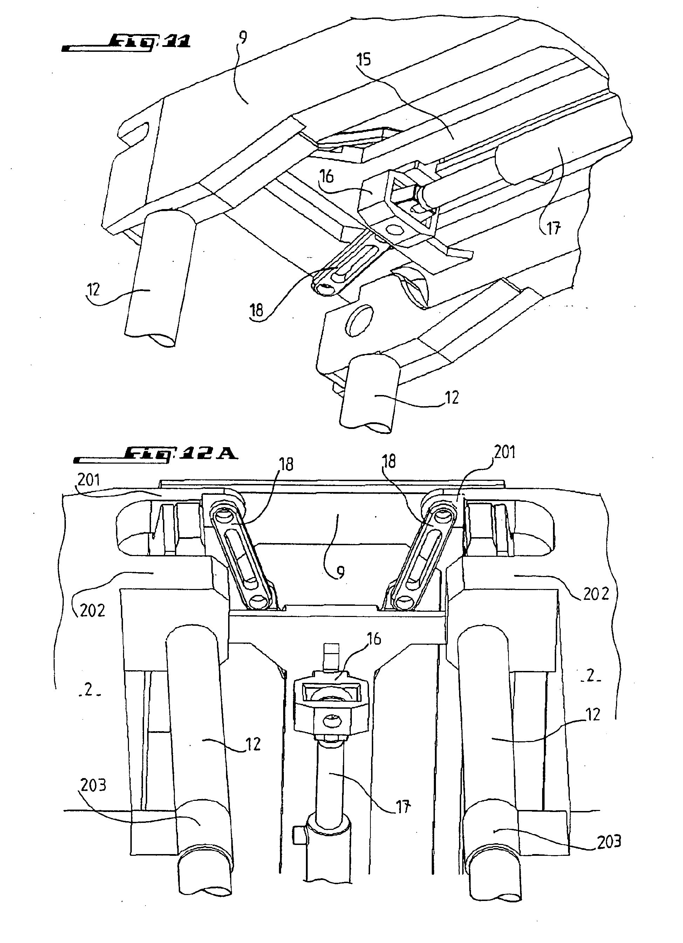

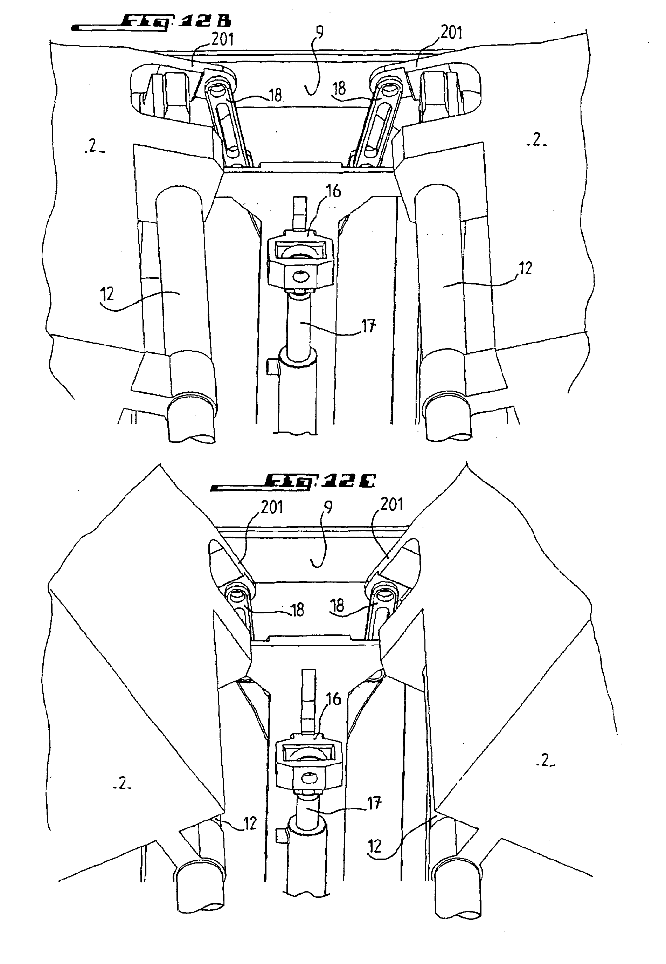

Il semble important de souligner ici que pendant le déploiement des éléments du véhicule de l'invention, et de manière analogue pendant le reploiement de ces éléments, le pivot central 9 reste dans sa position unique, exception faite du changement de niveau. Ceci est facilement compréhensible lorsque l'on regarde, à l'aide des figures 10 et 11 ainsi que la suite de figures 12A à 12D, les différents aménagements sur le pivot central 9 grâce auxquels les caissons 2 sont actionnés en pivotement. En effet, comme le laisse entrevoir la figure 10, et comme le montre en plus de détails la figure 11, le pivot central 9 comporte, agencé dans le sens de la longueur du pivot central et ainsi transversalement par rapport à l'axe longitudinal A du véhicule, un rail 15 sur lequel évoluent en translation deux glisseurs ou coulisseaux 16 dont chacun est actionné par un vérin de pivotement 17, les deux vérins 17 agissant en des directions opposées l'une de l'autre. Sur chacun des coulisseaux 16 sont articulées deux biellettes de pivotement 18, une pour chaque caisson 2, destinées à transformer le mouvement translatoire des coulisseaux 16 en un pivotement des caissons correspondants 2.

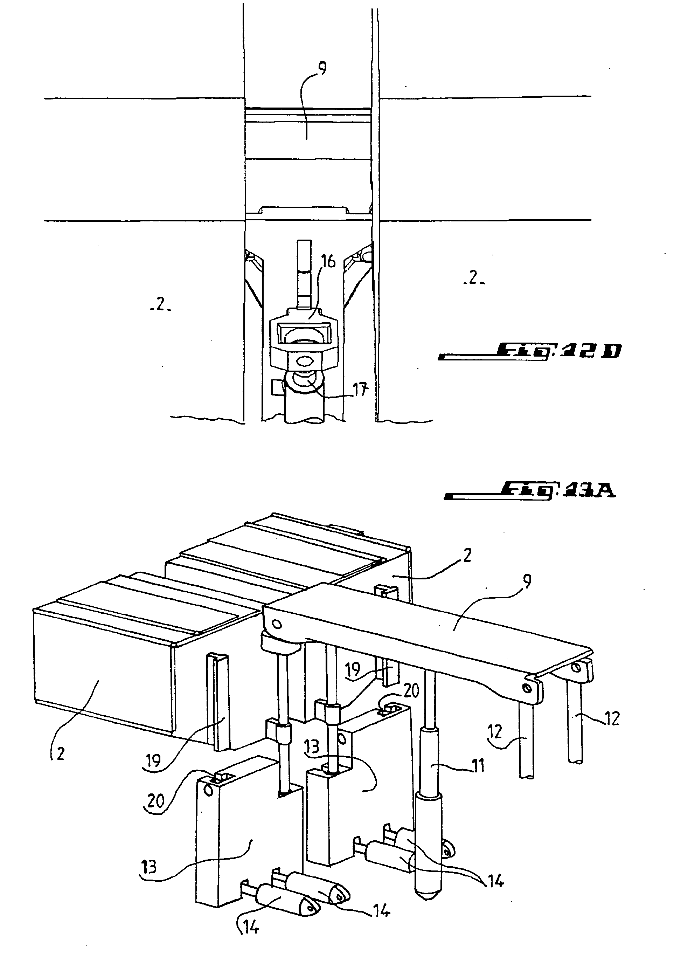

Les figures 12A à 12D montrent une synoptique de pivotement, à partir de leur position de repli, de deux caissons 2 autour de la jambe télescopique correspondante 12 et le changement de position du coulisseau 16 correspondant. On notera plus particulièrement sur la figure 12A l'articulation des biellettes 18 sur des bras de levier 201 formés sur les caissons 2 et agencés de manière à pivoter autour de la jambe télescopique correspondante 12. Le coulisseau 16 est au début en position d'extrémité extérieure (figure 12A) et à la fin en position d'extrémité inférieure (figure 12D), lorsque les deux caissons 2 sont déployés.

Comme le montrent les figures 13A à 13D, lorsque les caissons 2 sont dans leur orientation d'utilisation, donc de déploiement, ils sont descendus, ensemble avec le pivot central 9, au niveau d'utilisation. Pendant cette descente, qui est actionnée par le vérin de relevage 11, les quatre jambes télescopiques de guidage 12 sur lesquelles les caissons 2 sont montés pivotants, se rétractent tout en restant en appui sur les platines de fixation 13. En même temps, par le fait d'être descendus du niveau de pivotement au niveau d'utilisation, les caissons s'engagent, avec une partie en profilé formant une glissière mâle 19 solidaire des caissons, dans une rainure en profilé complémentaire formant une glissière femelle 20 conformée dans la platine de fixation 13 correspondante.

Lorsque les caissons 2 sont verrouillés dans les platines de fixation correspondantes 13, les caissons, avec ou sans les sous-ensembles flotteur / rampe, peuvent être inclinés autour de l'axe correspondant B afin d'amener le bout de rampe à hauteur de la berge d'embarquement ou de débarquement.

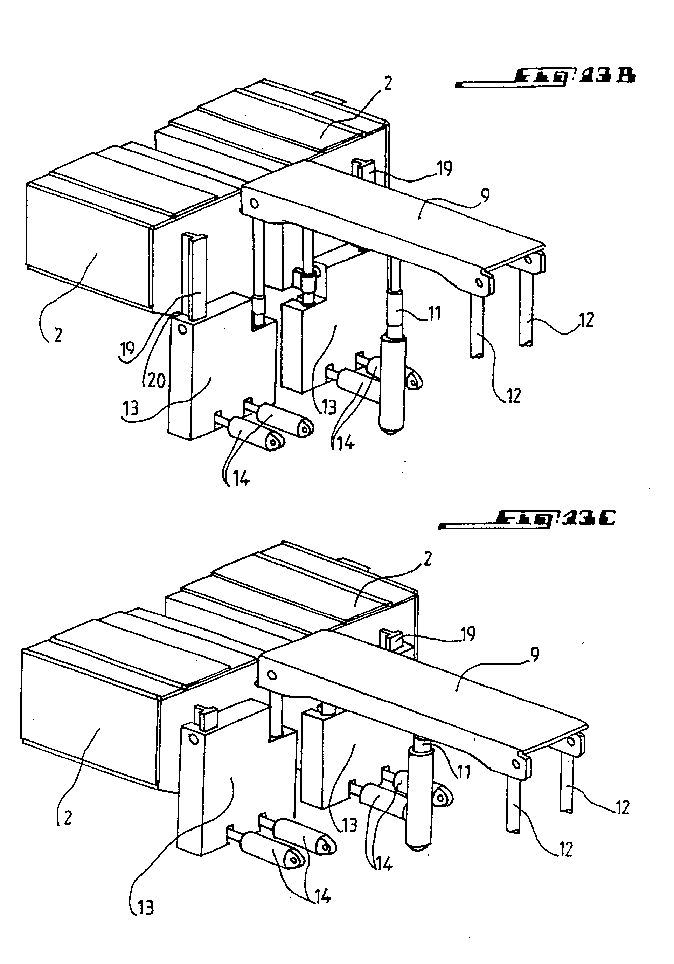

Les figures 13A à 13D montrent la descente d'un caisson 2 et du pivot central 9 en quatre positions successives. La figure 13A montre le caisson à la fin de son pivotement, mais encore en position haute. La figure 13B montre une première position intermédiaire dans laquelle le caisson 2 est descendu à un certain niveau. A ce niveau, les jambes télescopiques 12 butent en bout d'alésage de la platine 13 et commencent à se replier ou rétracter.

Lorsque le pivot central 9 et les caissons 2 descendent, lorsque la glissière mâle 19 du caisson 2 est entrée en liaison avec la glissière femelle 20, et lorsque l'ensemble descend, la partie mâle ou intérieure de la jambe télescopique est en butée au fond de l'alésage de la platine et fixe par rapport à la platine, seule la partie femelle ou le tube extérieur de la jambe télescopique sur laquelle est monté le caisson en pivotement, continue à coulisser dans l'alésage.

La figure 13C montre une seconde étape intermédiaire à laquelle le caisson 2 est presque entièrement descendu et la jambe télescopique correspondante 12 s'est fortement rétractée et est fixe par rapport à la platine 13.

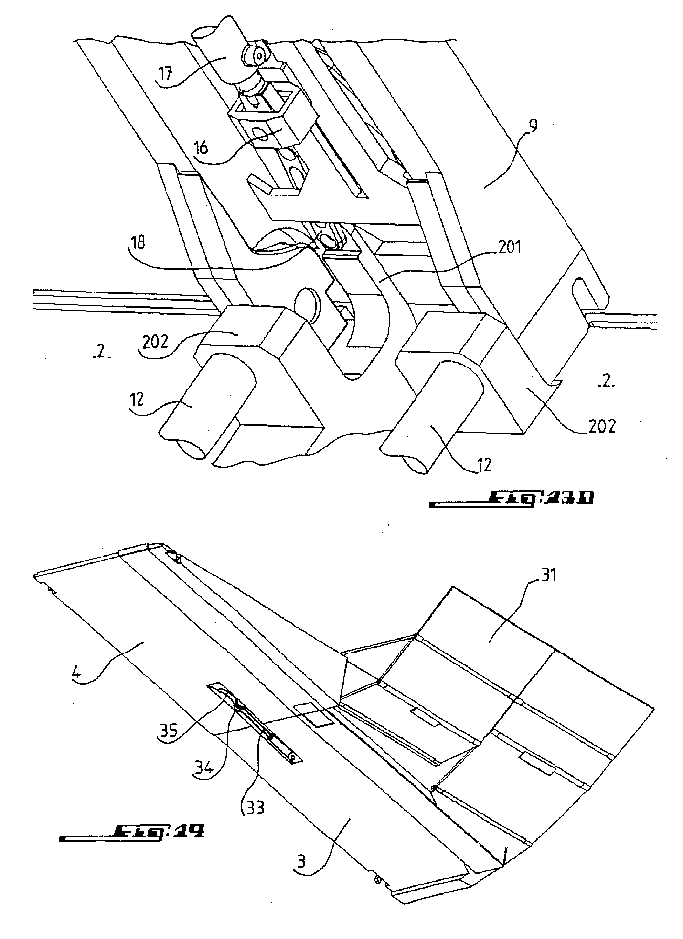

La figure 13D représente, en détail de la figure 13A et en une vue de dessous du pivot central 9, le montage en pivot de deux caissons 2 sur leur jambe télescopique 12 respective. Le vérin de pivotement 17 est relié, moyennant le coulisseau 16, aux deux biellettes 18 dont chacune est articulée sur un bras de levier 201 correspondant. Les deux caissons 2 étant en position déployée, le reploiement de celles-ci est obtenu par un mouvement de poussée du vérin 17 sur le coulisseau 16.

La figure 14 montre le mécanisme de déploiement des rampes 4 articulées sur les flotteurs 3. Comme on peut le voir par exemple sur la figure 1, en configuration repliée du véhicule de l'invention, les rampes 4 sont repliées sous les flotteurs 3. Et comme on peut le voir sur les figures 7E, 7F, les rampes 4 sont déployées par rapport au flotteur 3 par pivotement autour d'un axe C situé transversalement par rapport à l'étendue longitudinale du flotteur 3 et dans un plan parallèle à une surface supérieure ou de roulement du flotteur 3. Chaque flotteur 3 est donc relié à la rampe 4 adjacente par des moyens appropriés formant une charnière avec l'axe C comme axe de pivotement. Le flotteur 3 est représenté ici avec le carénage latéral 31 déployé et un platelage central 32 mis en position pour couvrir l'espace entre les deux flotteurs adjacents. Le pivotement de la rampe 4 est obtenu en agissant moyennant un vérin 33, sur un palonnier 34 et une biellette 35. Les deux faces en regard, en l'état déployé de la rampe 4, du flotteur 3 et de la rampe 4 sont pourvues de moyens permettant un verrouillage de la rampe déployée par rapport au flotteur.

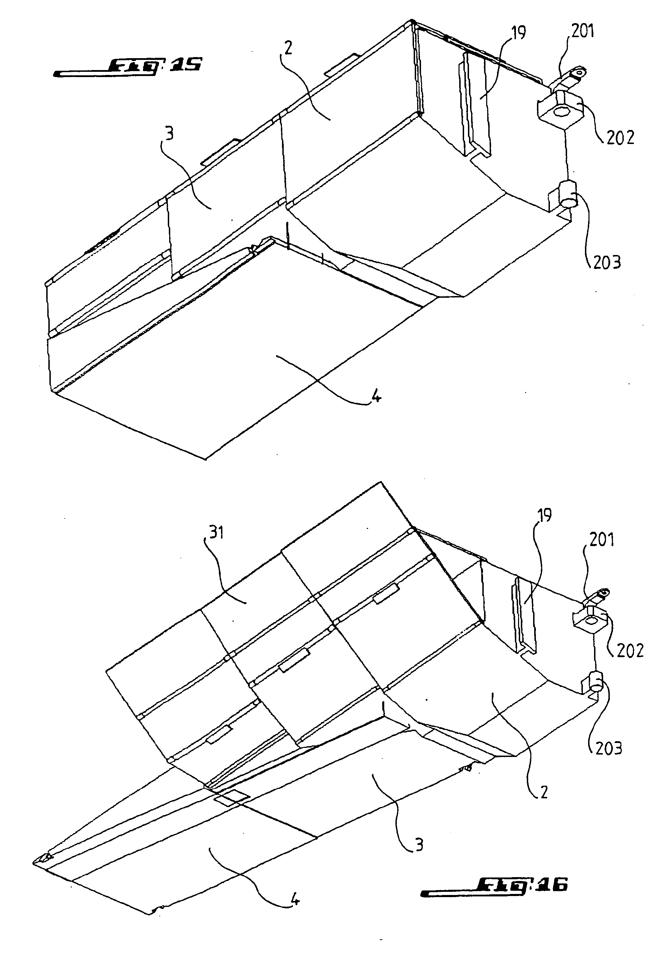

Les figures 15 et 16 montrent l'ensemble caisson 2, flotteur 3 et rampe 4 respectivement avec la rampe 4 repliée et avec la rampe 4 déployée. De même, les figures 15 et 16 montrent, respectivement en état replié et en état déployé, le carénage latéral 31 comportant une carène inférieure 311 et une carène supérieure 312 ainsi que le platelage 32.

Les ensembles caisson-flotteur-rampe constituent la voie de roulement et contribuent à la flottabilité du véhicule amphibie de l'invention. Les caissons sont les parties intérieures qui sont toujours déployées lors de la mise en oeuvre d'un bac ou d'un pont flottant. Ils sont articulés sur les jambes télescopiques 12 et s'engagent en translation sur les platines de fixation 13 après avoir été fait pivoter dans la position d'utilisation. Les flotteurs constituent la partie intermédiaire de l'ensemble caisson-flotteur-rampe et sont connectés au caisson de manière amovible afin de pouvoir en être détachés. Les rampes sont articulées en bout de flotteur. Sur les trois éléments caisson 2, flotteur 3 et rampe 4, un système de carène repliable est intégré : lors du déploiement des ensembles caisson-flotteur-rampe, trois vérins par caisson, flotteur et rampe déploient des éléments de carène variable comportant une carène inférieure 311 et une carène supérieure 312 et un platelage piéton 32 afin d'optimiser l'hydrodynamisme général du véhicule et d'élargir la voie ou la surface de parcage pour le passage des piétons.

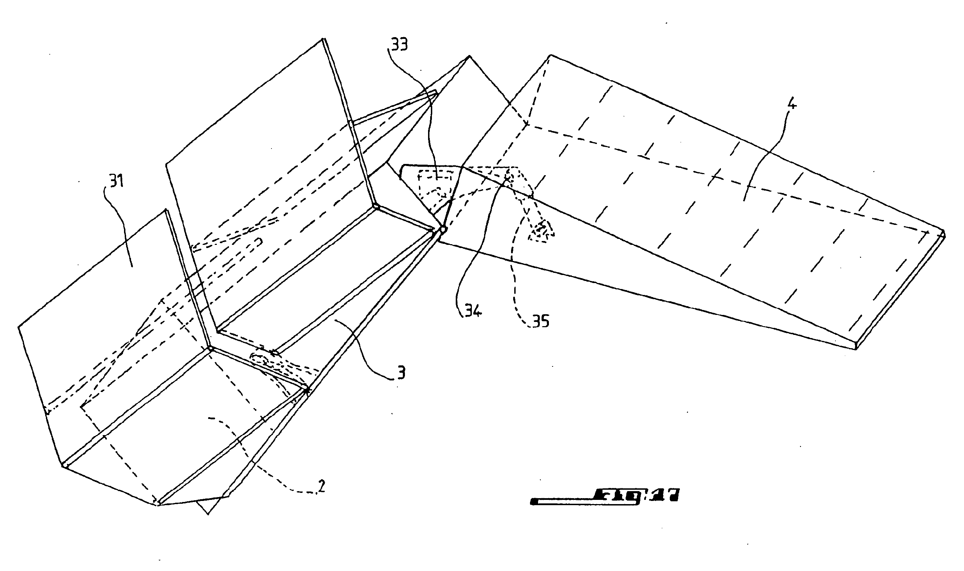

La figure 17 montre l'ensemble flotteur 3 et rampe 4 en position partiellement déployée, la rampe 4 ayant été fait pivoter partiellement autour de l'axe C de l'articulation reliant le flotteur 3 et la rampe 4 entre eux.

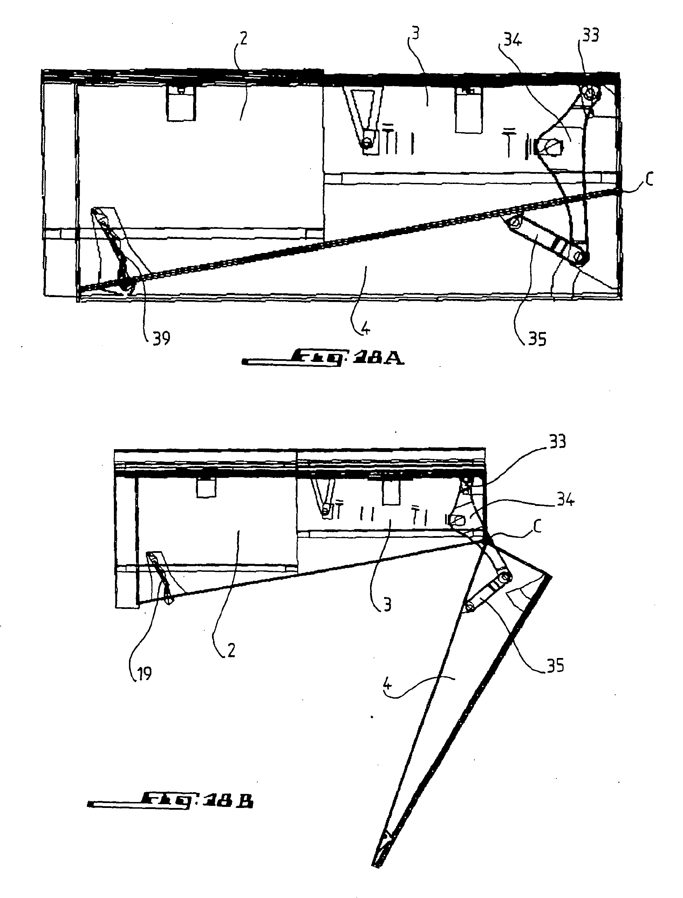

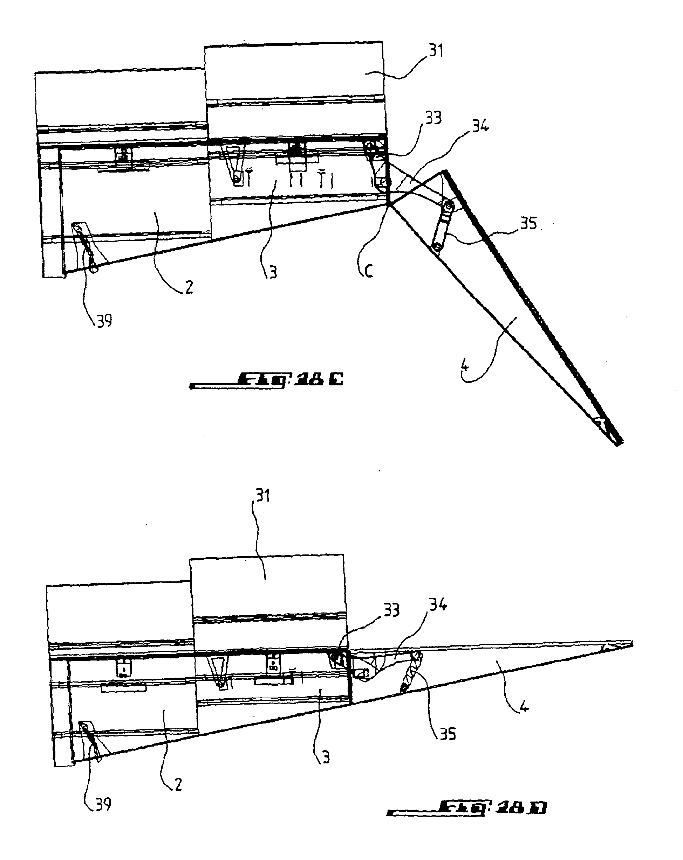

Le déploiement de la rampe 4 est actionné par le vérin 33 qui, en sortant sa tige mobile 331, permet le pivotement du palonnier 34 autour d'un pivot 341 solidaire du flotteur 3. Le pivotement du palonnier entraîne le pivotement de la rampe autour de l'axe C, par l'intermédiaire de la biellette 35, qui est attachée en pivot 351 à la rampe 4, d'une part et en pivot 342 au palonnier 34, d'autre part. Cette disposition permet une rotation à 180° de la rampe 4 par rapport au flotteur 3 sans trop démultiplier l'effort, tout en restant compact en position repliée. Les figures 18A à 18D montrent le déploiement de la rampe 4 au début, à deux étapes intermédiaires et à la fin du déploiement.

Le mécanisme à palonnier induit une certaine démultiplication de l'effort dans le vérin, cette démultiplication étant assez importante en position déployée. Le système représenté sur les figures 17 et 18A à 18D ne reprend pas d'effort d'embarquement du véhicule car des verrous bloquent le système en position déployée comme en position repliée. Le verrouillage de la rampe sous le flotteur, lorsque la rampe est déployée, n'apporte non seulement une meilleure stabilité du sous-ensemble flotteur 3 / rampe 4, mais remplit également un rôle de moyen de décharge de contrainte important. En effet, lorsque la rampe 4 est déployée et repose sur une berge, tout véhicule embarquant sur le bac ou le pont flottant exercera un effort maximal sur les vérins au moment où il est positionné sur la charnière représentée par l'axe C. Cet effort maximal est repris par le verrou lorsqu'il est mis en place.

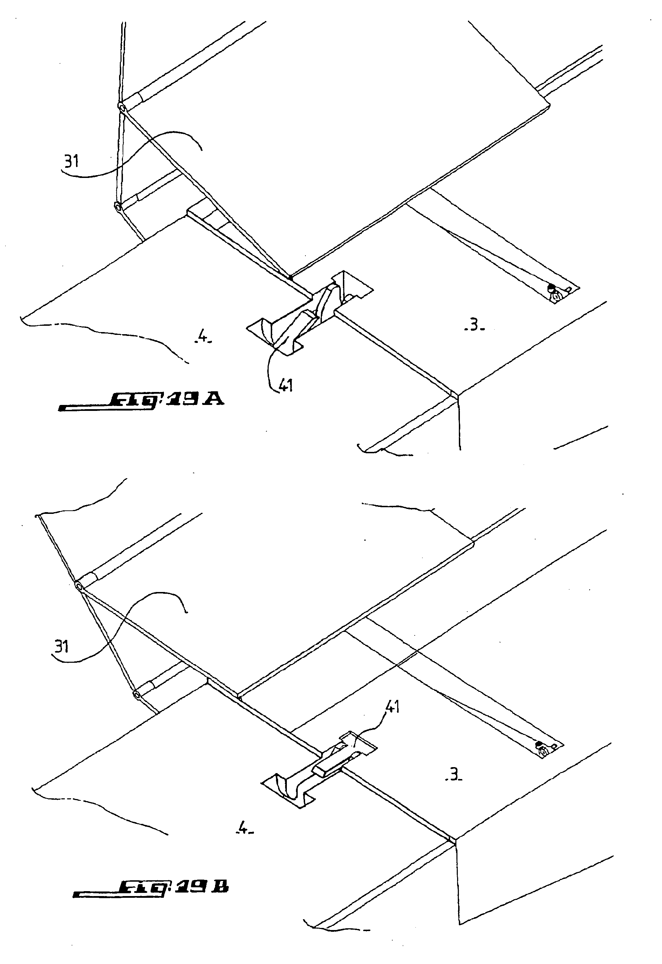

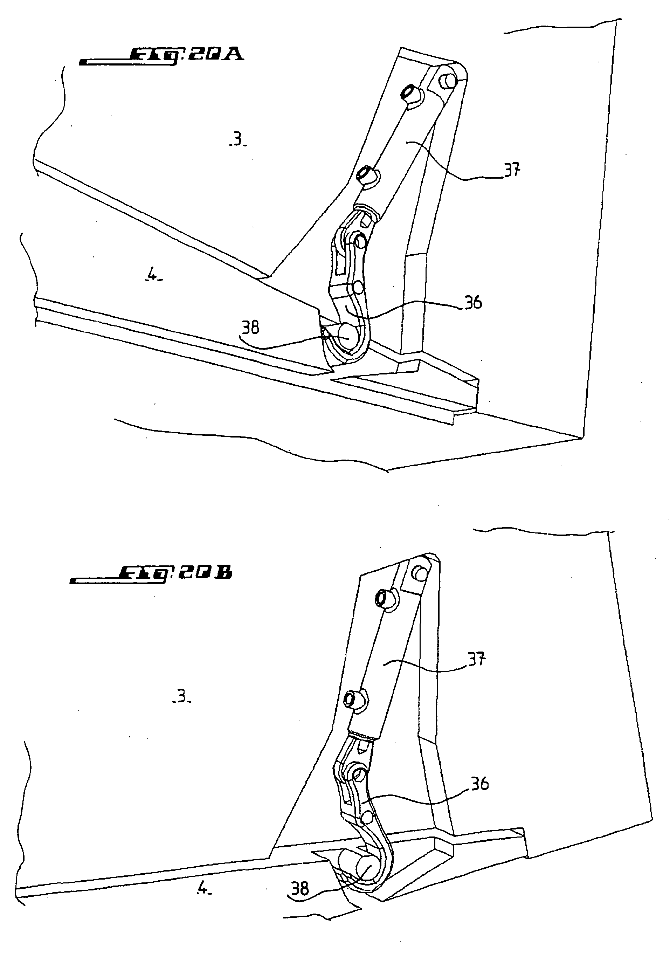

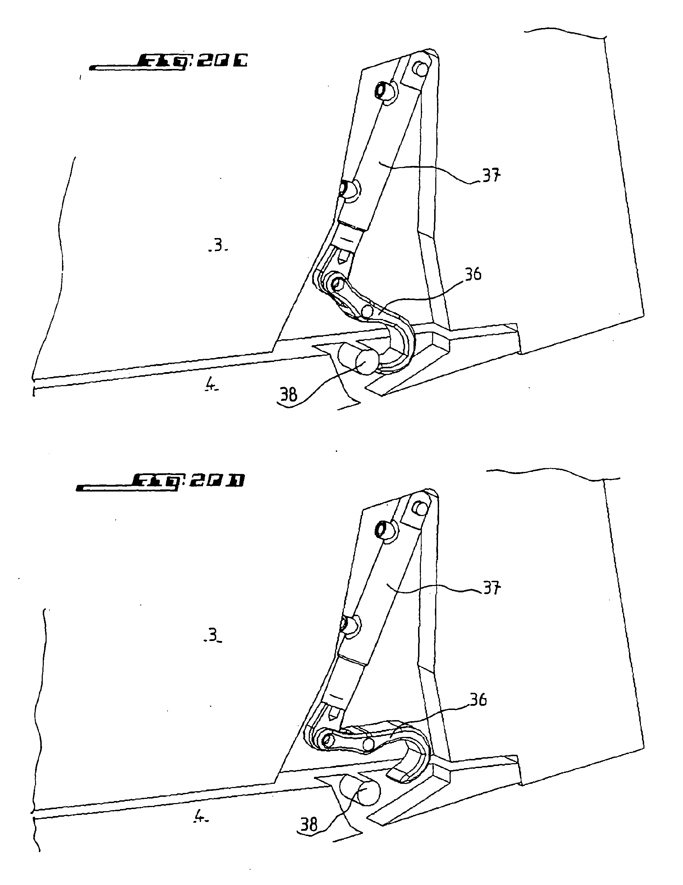

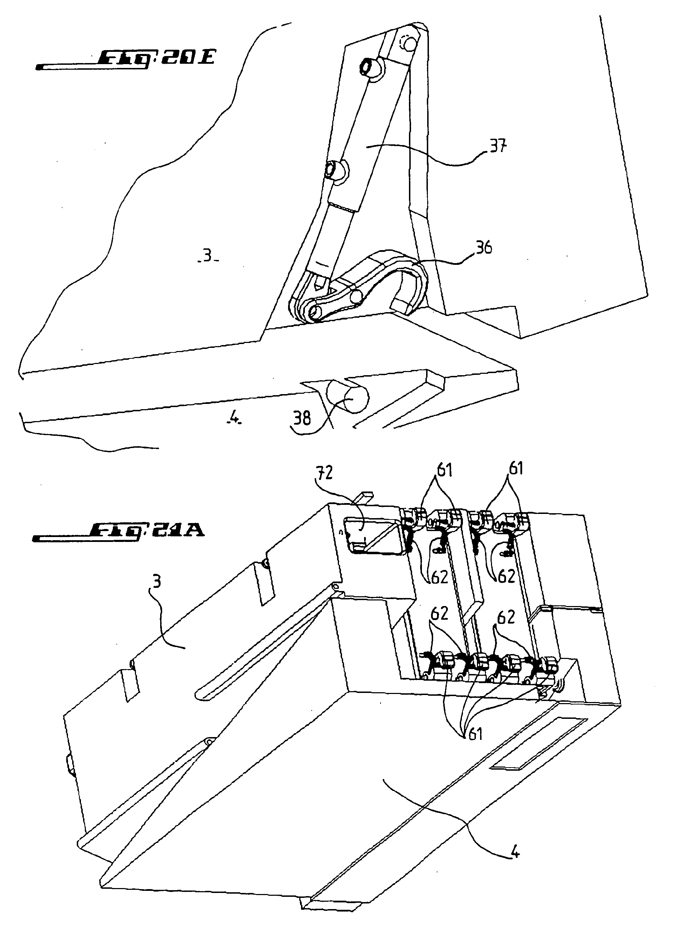

Les figures 19A, 19B, d'une part, et les figures 20A à 20E, d'autre part, représentent des moyens de verrouillage destinés à verrouiller la rampe respectivement en position déployée ou en position repliée. Pour le verrouillage en position déployée, ces moyens s'apparentent à un système dit «marteau» en raison de la forme générale du moyen d'ancrage utilisé. Ce système comprend une pièce massive 41 comportant un bras articulé par une de ses deux extrémités opposées sur le flotteur 3 et pourvu, à l'autre des deux extrémités opposées du bras, d'une tête d'ancrage s'étendant essentiellement transversalement à la fois par rapport à l'étendue longitudinale du bras et par rapport à l'axe d'articulation du bras. La pièce massive 41 est articulée sur l'arête de la rampe 4 qui viendra en contact avec le flotteur 3 et viendra se loger dans un réceptacle femelle conformé dans le flotteur. Lorsque le marteau 41 est engagé dans ce réceptacle, le degré de liberté de rotation de la rampe 4 autour de sa charnière C est annulé.

Pour le verrouillage en position repliée, les moyens de verrouillage s'apparentent à un système dit « crochet », qui comprend un crochet 36 articulé sur le flanc intérieur du flotteur, ainsi qu'un vérin 37 conformé et agencé de manière à pouvoir actionner le crochet 36 respectivement pour verrouiller et pour déverrouiller la rampe 4. Cette opération de déverrouillage et son inverse s'effectuent de manière automatisée depuis le poste de commande du véhicule de l'invention.

Lors de la réalisation d'un bac ou d'un pont flottant, des moyens de connexion inter véhicule permettent de verrouiller deux véhicules de l'invention adjacents l'un à l'autre. Les moyens de connexion inter véhicule sont de type courts, mixtes ou longs suivant la configuration la plus appropriée en opération. De plus, les moyens de connexion inter-véhicules sont disposés de manière symétrique pour permettre toutes les combinaisons de déploiement imaginables.

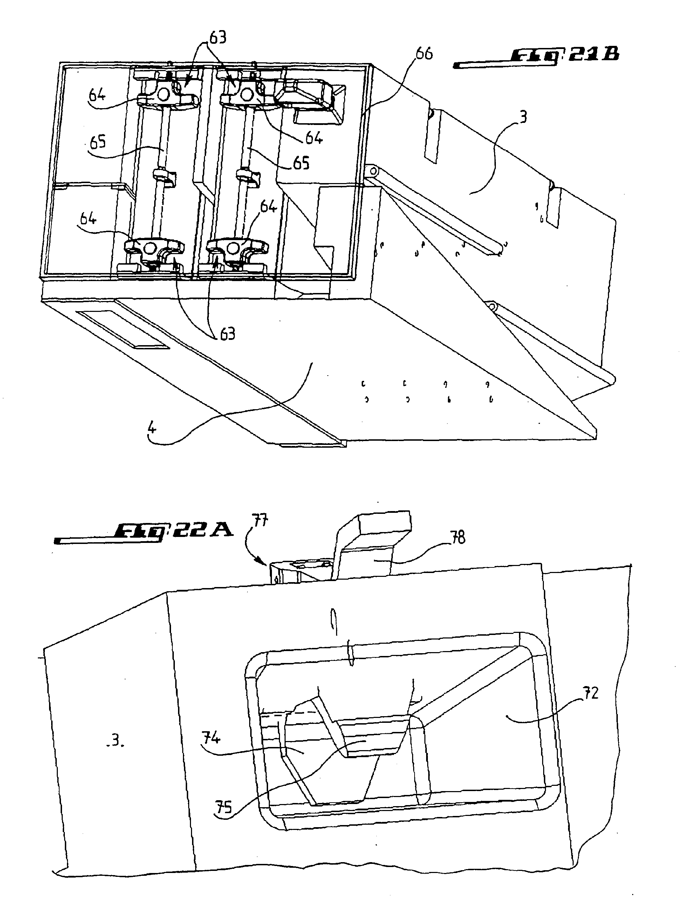

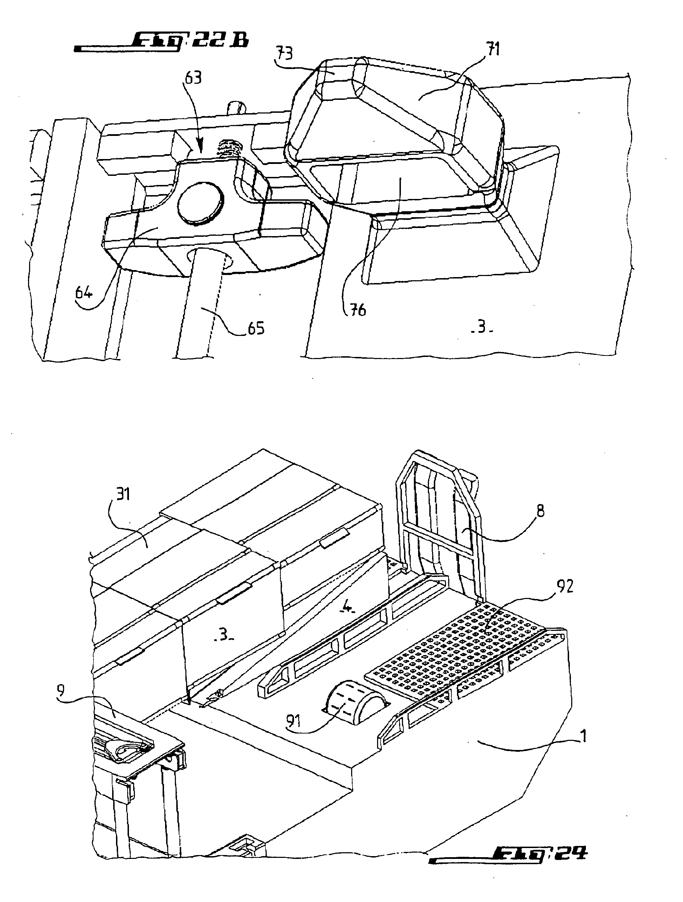

Ainsi, les moyens de connexion inter-véhicules comprennent, par exemple, des verrous mâles et des verrous femelles sur chaque interface de caisson ou de flotteur-rampe, comme cela est représenté sur les figures 21A et 21B et en davantage de détails sur les figures 22A, 22B. Un autre agencement est obtenu par exemple en plaçant des verrous mâles sur les interfaces du caisson droit ou sur le sous-ensemble flotteur-rampe droit, des verrous femelles sur les interfaces du caisson gauche ou flotteur gauche.

Par ailleurs, le système de verrouillage est complété avantageusement par des centreurs respectivement mâle et femelle formés ou montés, par exemple, sur les flotteurs.

Les détails d'un système de connexion inter-véhicules sont représentés sur les figures 21A, 21B et, en davantage de détails sur les figures 22A et 22B.

Des verrous mâles 61 sont des crochets maintenus inclinés vers le centre par des ressorts 62. Lors de la connexion, des verrous femelles 63 comprenant des traverses 64 et des vis 65, viennent s'écarter vers l'extérieur par rotation des vis 65. Cet écartement entraîne le contact entre les traverses 64 et les crochets 61 qui seront amenés à basculer vers l'intérieur pour venir crocheter un cadre rigide périmétrique 66 de l'autre flotteur 3. Le contact entre les crochets 61 et le cadre 66 constitue la connexion entre flotteurs.

Une particularité du système représenté est que, outre le système de verrouillage entre flotteurs, un système de préverrouillage est intégré afin de pouvoir connecter les modules flottants avec plus de précision et de facilité, lors de manoeuvres dans un courant fort.

Le fonctionnement du système de préverrouillage est le suivant. Lors d'un accostage dynamique, un corps 71 disposé rigidement en proéminence par rapport à l'interface du flotteur et ayant une forme au moins partiellement pointue ou pyramidale, vient se retrouver en face d'un orifice 72 formé sur le flotteur d'interface. Lors de la phase d'entrée du corps 71, qui est conformé pour pouvoir attraper des différences des niveaux de l'ordre de 100 mm entre l'axe du corps 71 et un plan médian horizontal de l'orifice 72, la pointe 73 du corps 71 vient pousser un linguet 74 pour permettre un basculement d'un crochet 75 dont il est solidaire. Ce basculement entraîne le logement du crochet 75 dans un évidement 76 du corps 71. Un système de came 77 empêche le linguet 74 de manière discontinue et le crochet 75 de rebasculer en sens inverse lorsque le corps 71 tente de ressortir. Le préverrouillage est donc effectué.

Le désengagement du corps 71 pour la déconnexion des modules s'effectue par pivotement d'une poignée 78 pour soulever le système de came 77 et permettre ainsi au crochet 75 de sortir de l'évidement 76 du corps 71.

De la même manière que pour les verrous d'interface de connexion entre flotteurs 3, des moyens de verrouillage de caisson sont composés, d'une part, de crochets pivotants et d'autre part, de traverses coulissantes sur vis. Cette disposition a été choisie afin que les interfaces soient compatibles et afin de pouvoir ainsi connecter à un caisson soit un autre caisson soit un flotteur côté rampe repliée.

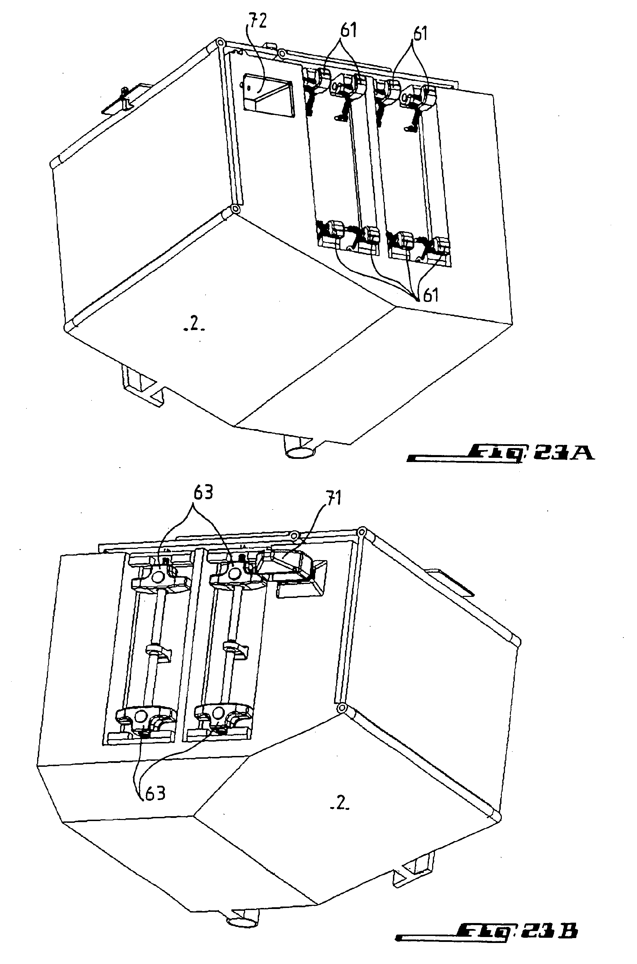

Les figures 23A et 23B représentent respectivement des moyens de verrouillage mâles et des moyens de verrouillage femelles. Ces deux figures montrent également la disposition de centreurs sur les deux éléments accrochés et verrouillés l'un à l'autre. Les centreurs sont référencés respectivement 81 et 82.

Il est à noter que l'interface des flotteurs du côté caisson présente également une interface de verrouillage similaire à celle représentée pour le verrouillage de deux caissons entre eux ou de deux flotteurs entre eux. De même, les systèmes de préverrouillage sont également identiques à ceux précédemment exposés selon la connexion entre flotteurs, puisque le verrouillage entre deux véhicules adjacents doit être possible quelque soit la configuration de déploiement de chacun des deux véhicules à relier.

Lors de déploiements mixtes ou courts, les flotteurs 3 avec les rampes repliées 4, qui sont situés du côté du déploiement court, restent sur la caisse 3. Cependant, comme il a été évoqué déjà plus haut, par exemple en référence à la figure 6A, les flotteurs 3 destinés à passer sur la caisse 1 ne peuvent pas rester dans leur position initiale car le pivotement des caissons 2, qui s'effectue quelle que soit la configuration de déploiement, demande un dégagement des flotteurs vers l'avant ou vers l'arrière du véhicule pour créer l'espace libre nécessaire pour pouvoir effectuer le pivotement. Le mouvement des flotteurs 3 est donc un mouvement de translation rectiligne vers l'extérieur du véhicule, c'est-à-dire respectivement vers l'avant et vers l'arrière du véhicule suivant l'axe longitudinal de la caisse 1.

Comme le représente la figure 24, le mouvement de translation est facilité par des rouleaux 91 et un guidage est assuré par des rails 92 qui sont fixés sur la partie arrière de la caisse et sur la cabine 5. Ce système nécessite une légère montée du pivot central 9 lors d'un déploiement long afin de dégager les flotteurs 3 avec la rampe 4 des rails des guidages. La montée est de l'ordre de 50 mm. La translation du sous-ensemble flotteur 3 / rampe 4 est actionnée par les rouleaux 91 montés en pivot sur la caisse 1.

## Revendications

1. Véhicule amphibie comportant quatre groupes d'éléments (2, 3, 4) dont chacun comporte au moins un caisson (2), un flotteur (3) et une rampe (4), ces groupes d'éléments étant rangés sur une base roulante automotrice (1), certains de ces éléments étant au moins partiellement sur les autres et suivant une orientation essentiellement parallèle à un axe longitudinal (A) de la base roulante (1) lorsque le véhicule est dans une configuration repliée pour déplacement sur terre ferme, et conformés pour pouvoir être déployés de manière à former une partie de voie ou de pont orientée transversalement par rapport à l'axe longitudinal (A) de la base roulante (1) lorsque le véhicule doit former, seul ou avec un autre véhicule de même conception, un pont flottant ou un bac,
le véhicule comprenant en outre un dispositif de déploiement conformé pour pouvoir déployer, suivant au moins trois configurations différentes, le caisson (2) de chaque groupe d'éléments (2, 3, 4) seul ou ensemble avec le flotteur (3) et la rampe (4) et cela essentiellement par pivotement autour de quatre axes verticaux (12) espacés les uns des autres, et des premiers moyens permettant, lorsque le véhicule est dans une configuration repliée, d'éloigner dans chaque groupe d'éléments (2, 3, 4) le caisson (2) des autres éléments (3, 4) suivant une direction sensiblement parallèle à l'axe longitudinal de la base roulante (1).

2. Véhicule amphibie selon la revendication 1, **caractérisé en ce que** le dispositif de déploiement comprend un pivot central (9) comportant un vérin de relevage (11) prenant appui sur la base roulante (1) et une jambe télescopique de guidage (12) par groupe d'éléments (2) à pivoter, chacune de ces jambes télescopiques (12) servant comme axe vertical de pivotement à un groupe d'éléments (2).

3. Véhicule amphibie selon la revendication 1 ou 2, **caractérisé en ce que** le dispositif de déploiement comprend des platines de fixation (13) inclinables à partir d'une position sensiblement verticale et permettant de fixer les groupes d'éléments (2) dans leur position déployée.

4. véhicule amphibie selon l'une quelconque des revendications 1 à 3, **caractérisé en ce que** le dispositif de déploiement comprend des deuxièmes moyens (33-35) conformés pour permettre un déploiement des rampes (4) par rapport aux flotteurs (3) avec un effet de démultiplication croissant de l'effort de déploiement au fur et à mesure que le déploiement des rampes (4) progresse.

5. Véhicule amphibie selon l'une quelconque des revendications 1 à 4, **caractérisé en ce qu'**il comprend des premiers moyens de verrouillage (36-38, 41) permettant de verrouiller les différents éléments (2-4) aussi bien dans leur position déployée que dans leur position repliée.

6. véhicule amphibie selon l'une quelconque des revendications 1 à 5, **caractérisé en ce qu'**il comprend des deuxièmes moyens de verrouillage (61-65, 71-76) permettant de le verrouiller avec un autre véhicule de même conception lors de la réalisation d'un bac ou d'un pont, les deuxièmes moyens de verrouillage (61-65, 71-76) étant conformés pour permettre un verrouillage entre deux véhicules quelle que soit la configuration de déploiement de chacun des véhicules.

7. Véhicule amphibie selon l'une quelconque des revendications 1 à 6, **caractérisé en ce que**, selon une première configuration de déploiement, seul le caisson (2) de chaque groupe d'éléments (2-4), est déployé.

8. véhicule amphibie selon l'une quelconque des revendications 1 à 6, **caractérisé en ce que**, selon une deuxième configuration de déploiement, de deux groupes d'éléments (2-4) seul le caisson (2) et des deux autres groupes d'éléments (2-4) le caisson (2), le flotteur (3) et la rampe (4) sont déployés.

9. Véhicule amphibie selon l'une quelconque des revendications 1 à 7, **caractérisé en ce que**, selon une troisième configuration de déploiement, de chacun des quatre groupes d'éléments (2-4) le caisson (2), le flotteur (3) et la rampe (4) sont déployés.

## Claims

1. An amphibious vehicle, comprising four sets of elements (2, 3, 4), each of which comprises at least one case (2), a floating body (3), and a ramp (4), such sets of elements being arranged on a self-propelled rolling base (1), some of these elements being located at least partially on each other and along an orientation which is essentially parallel to a longitudinal axis (A) of the rolling base (1), when the vehicle is in a folded-in configuration for moving ashore, and being shaped so that they can be folded out so as to form a portion of a roadway or bridge oriented transversely with respect to the longitudinal axis (A) of the rolling base (1) when the vehicle is to form, individually or together with another vehicle of the same design, a floating bridge or a ferry,
the vehicle further comprising a deployment device shaped so that it can fold out, in at least three different configurations, the case (2) of each set of elements (2, 3, 4), individually or together with the floating body (3) and the ramp (4), essentially by pivoting about four vertical axes (12) spaced apart from each other, and first means allowing, when the vehicle is in a folded-in configuration, to move away in each set of elements (2, 3, 4) the case (2) of the other elements (3, 4) in a direction which is substantially parallel to the longitudinal axis of the rolling base (1).

2. The amphibious vehicle according to claim 1, **characterized in that** the deployment device comprises a center pivot (9) having a lifting jack (11) resting on the rolling base (1), and a telescopic guiding leg (21) for each set of elements to be pivoted (2), each of these telescopic legs (12) serving as a vertical pivoting axis for a group of elements (2).

3. The amphibious vehicle according to claim 1 or 2, **characterized in that** the deployment device comprises fastening plates (13) which can be tilted from a substantially vertical position and allow for the sets of elements (2) to be secured in the folded-out position thereof.

4. The amphibious vehicle according to any of claims 1 to 3, **characterized in that** the deployment device comprises second means (33 to 35) shaped to allow for deployment of the ramps (4) in relation to the floating bodies (3) with an increasing reduction effect of the deployment force as the ramps (4) are progressively folded out.

5. The amphibious vehicle according to any of claims 1 to 4, **characterized in that** it comprises first locking means (36 to 38, 41) allowing for the different elements (2 to 4) to be locked, both in the folded-out position thereof and in the folded-in position thereof.

6. The amphibious vehicle according to any of claims 1 to 5, **characterized in that** it comprises second locking means (61 to 65, 71 to 76) allowing the same to be locked together with another vehicle of the same design when a ferry or bridge is made, the second locking means (61 to 65, 71 to 76) being shaped to allow for interlocking of two vehicles independently from the deployment configuration of each of the vehicles.

7. The amphibious vehicle according to any of claims 1 to 6, **characterized in that**, according to a first deployment configuration, only case (2) of each set of elements (2 to 4) is folded out.

8. The amphibious vehicle according to any of claims 1 to 6, **characterized in that**, according to a second deployment configuration, from two sets of elements (2 to 4), only case (2) and from the other two sets of elements (2 to 4), case (2), floating body (3), and ramp (4) are folded out.

9. The amphibious vehicle according to any of claims 1 to 7, **characterized in that**, according to a third deployment configuration, from each of the four sets of elements (2 to 4), case (2), floating body (3), and ramp (4) are folded out.

## Patentansprüche

1. Amphibienfahrzeug, umfassend vier Gruppen von Elementen (2, 3, 4), von denen jede mindestens einen Senkkasten (2), einen Schwimmkörper (3) und eine Rampe (4) umfasst, wobei diese Gruppen von Elementen auf einer selbstfahrenden fahrbaren Basis (1) angeordnet sind, wobei sich einige dieser Elemente mindestens teilweise übereinander und in einer Orientierung, die im Wesentlichen parallel zu einer Längsachse (A) der fahrbaren Basis (1) ist, befinden, wenn sich das Fahrzeug in einer eingeklappten Konfiguration an Land befindet, und gestaltet sind, um ausklappbar zu sein, um einen Teil einer Fahrbahn oder Brücke zu bilden, die quer zur Längsachse (A) der fahrbaren Basis (1) orientiert ist, wenn das Fahrzeug alleine oder mit einem anderen Fahrzeug der gleichen Bauart eine Schwimmbrücke oder eine Fähre bilden soll,
wobei das Fahrzeug ferner eine Entfaltungsvorrichtung, die gestaltet ist, um in mindestens drei verschiedenen Konfigurationen den Senkkasten (2) jeder Gruppe von Elementen (2, 3, 4) alleine oder zusammen mit dem Schwimmkörper (3) und der Rampe (4) ausklappen zu können, und zwar im Wesentlichen durch Verschwenken um vier senkrechte, voneinander beabstandete Achsen (12), und erste Mittel, die es ermöglichen, wenn sich das Fahrzeug in einer eingeklappten Konfiguration befindet, in jeder Gruppe von Elementen (2, 3, 4) den Senkkasten (2) von den anderen Elemente (3, 4) in einer Richtung zu entfernen, die im Wesentlichen parallel zur Längsachse der fahrbaren Basis (1) ist, umfasst.

2. Amphibienfahrzeug nach Anspruch 1, **dadurch gekennzeichnet, dass** die Entfaltungsvorrichtung einen mittleren Drehzapfen (9) umfasst, der ein Hebezeug (11), das sich auf der fahrbaren Basis (1) abstützt, und ein teleskopisches Führungsbein (12) für jede zu verschwenkende Gruppe von Elementen (2) umfasst, wobei jedes dieser teleskopischen Beine (12) als senkrechte Schwenkachse für eine Gruppe von Elementen (2) dient.

3. Amphibienfahrzeug nach Anspruch 1 oder 2, **dadurch gekennzeichnet, dass** die Entfaltungsvorrichtung Befestigungsplatinen (13) umfasst, die von einer im Wesentlichen senkrechten Position aus geneigt werden können und es ermöglichen, die Gruppen von Elementen (2) in ihrer ausgeklappten Position festzulegen.

4. Amphibienfahrzeug nach einem der Ansprüche 1 bis 3, **dadurch gekennzeichnet, dass** die Entfaltungsvorrichtung zweite Mittel (33 bis 35) umfasst, die gestaltet sind, um ein Ausklappen der Rampen (4) im Verhältnis zu den Schwimmkörpern (3) mit einem zunehmenden Untersetzungseffekt der Ausklappkraft, in dem Maße wie die Rampen (4) nach und nach ausgeklappt werden, zu ermöglichen.

5. Amphibienfahrzeug nach einem der Ansprüche 1 bis 4, **dadurch gekennzeichnet, dass** es erste Verriegelungsmittel (36 bis 38, 41) umfasst, die es ermöglichen, die verschiedenen Elemente (2 bis 4) sowohl in ihrer ausgeklappten Position als auch in ihrer eingeklappten Position zu verriegeln.

6. Amphibienfahrzeug nach einem der Ansprüche 1 bis 5, **dadurch gekennzeichnet, dass** es zweite Verriegelungsmittel (61 bis 65, 71 bis 76) umfasst, die es ermöglichen, das Fahrzeug mit einem anderen Fahrzeug gleicher Bauart zu verriegeln, wenn eine Fähre oder eine Brücke ausgebildet wird, wobei die zweiten Verriegelungsmittel (61 bis 65, 71 bis 76) gestaltet sind, um eine Verriegelung zwischen zwei Fahrzeugen unabhängig von der Ausklappkonfiguration jedes der Fahrzeuge zu ermöglichen.

7. Amphibienfahrzeug nach einem der Ansprüche 1 bis 6, **dadurch gekennzeichnet, dass** gemäß einer ersten Ausklappkonfiguration nur der Senkkasten (2) jeder Gruppe von Elementen (2 bis 4) ausgeklappt wird.

8. Amphibienfahrzeug nach einem der Ansprüche 1 bis 6, **dadurch gekennzeichnet, dass** gemäß einer zweiten Ausklappkonfiguration von zwei Gruppen von Elementen (2 bis 4) nur der Senkkasten (2) und von den beiden anderen Gruppen von Elementen (2 bis 4) der Senkkasten (2), der Schwimmkörper (3) und die Rampe (4) ausgeklappt werden.

9. Amphibienfahrzeug nach einem der Ansprüche 1 bis 7, **dadurch gekennzeichnet, dass** gemäß einer dritten Ausklappkonfiguration von jeder der vier Gruppen von Elementen (2 bis 4) der Senkkasten (2), der Schwimmkörper (3) und die Rampe (4) ausgeklappt werden.
